(19) Europäisches Patentamt
European Patent Office
Office européen des brevets

(11) EP 4 707 282 A1

(12) EUROPEAN PATENT APPLICATION

(43) Date of publication:
**11.03.2026 Bulletin 2026/11**

(21) Application number: **25195898.9**

(22) Date of filing: **14.08.2025**

(51) International Patent Classification (IPC):
***C07F 9/00*** *(2006.01)*

(52) Cooperative Patent Classification (CPC):
**C07F 9/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.08.2024 KR 20240109287**
**13.08.2025 KR 20250111993**

(71) Applicants:
- **SK Innovation Co., Ltd.**
  **Seoul 03188 (KR)**
- **SK On Co., Ltd.**
  **Seoul 03161 (KR)**

(72) Inventors:
- **LEE, Han Sol**
  **34124 Daejeon (KR)**
- **GO, Hyeon Jin**
  **34124 Daejeon (KR)**
- **PARK, Myung Soo**
  **34124 Daejeon (KR)**
- **RYU, Hye Min**
  **34124 Daejeon (KR)**
- **BAN, Hee Jung**
  **34124 Daejeon (KR)**
- **KIM, Myoung Lae**
  **34124 Daejeon (KR)**
- **LEE, Hong Won**
  **34124 Daejeon (KR)**
- **CHOI, Jae Hoon**
  **34124 Daejeon (KR)**

(74) Representative: **Prüfer & Partner mbB**
**Patentanwälte · Rechtsanwälte**
**Sohnckestraße 12**
**81479 München (DE)**

# (54) MONOMER FOR ELECTROLYTE, ELECTROLYTE FOR SECONDARY BATTERY INCLUDING THE SAME, METHOD OF PREPARING THE SAME AND LITHIUM SECONDARY BATTERY INCLUDING THE SAME

(57) A monomer for an electrolyte according to the embodiments of the present disclosure may include a compound represented by Formula 1. The lithium secondary battery according to the embodiments of the present disclosure includes a cathode, an anode, and an electrolyte, and the electrolyte may include a polymer formed by polymerizing the compound represented by Formula 1.

EP 4 707 282 A1

## Description

### TECHNICAL FIELD

The present disclosure relates to a monomer for an electrolyte, an electrolyte for a secondary battery comprising the same, a method of preparing the electrolyte, and a lithium secondary battery comprising the electrolyte.

### BACKGROUND

A secondary battery is a battery that can be repeatedly charged and discharged. With the rapid progress of information and communication technology and display industries, the secondary battery has been widely applied as a power source to various portable electronic telecommunication devices such as a camcorder, a mobile phone, a laptop computer, and the like. Recently, battery packs utilizing the secondary batteries have also been developed and used as power sources in eco-friendly automobiles, such as an electric vehicle, a hybrid vehicle, and the like.

Examples of the secondary battery include lithium secondary batteries, nickel-cadmium batteries, nickel-hydrogen batteries, and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

Commercially available lithium secondary batteries primarily utilize liquid-based, which can be a safety concern due to leakage, ignition, and explosion due to sudden environmental changes, including temperature fluctuations, external impacts, and the like. To address these problems, development of solid electrolytes is being undertaken to enhance stability and increase energy density.

Such all-solid-state batteries can comprise gel polymers, oxides, sulfides, or composite polymers as the electrolyte to enhance stability against ignition and explosion caused by external impacts or external environmental fluctuations.

However, some batteries comprising solid electrolytes still may utilize at least some liquid electrolyte, and therefore still carry some risk of ignition. Accordingly, there is a need in the art to address problems associated with using liquid electrolyte in secondary batteries.

### SUMMARY

Provided herein is an electrolyte with improved flame retardancy and, in some embodiments, improved ionic conductivity. Also provided herein is a method of preparing such an electrolyte for a secondary battery. Yet also provided herein is a lithium secondary battery with improved stability and electrochemical characteristics.

In one embodiment, the electrolyte is prepared from a monomer for an electrolyte such as a compound represented by Formula 1 below.

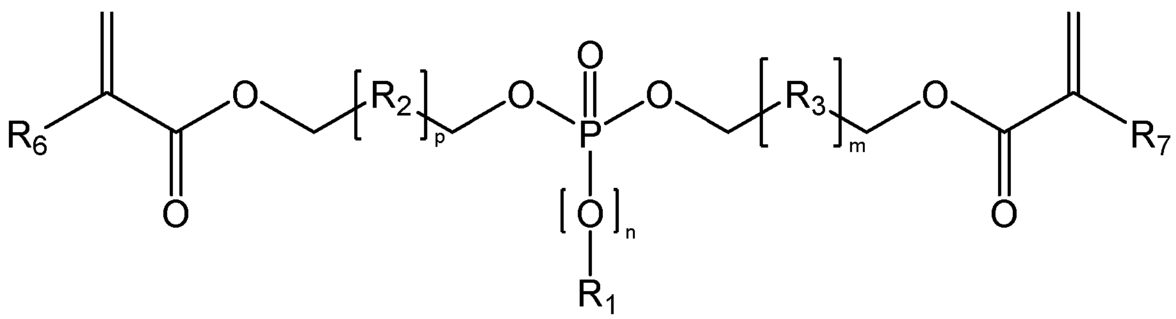

[Formula 1]

wherein:

$R_1$ is a substituted or unsubstituted C6 to C12 aromatic hydrocarbon group or a group represented by *-$R_4$-$R_5$;
$R_2$ and $R_3$ are each independently a substituted or unsubstituted C1 to C6 alkylene group, or a substituted or unsubstituted C1 to C7 oxyalkylene group;
$R_4$ is a C3 to C12 alkylene group in which at least one hydrogen atom is substituted with a fluorine atom;
$R_5$ is a polymerizable functional group;
* represents the bond to the adjacent oxygen atom;

$R_6$ and $R_7$ are each independently hydrogen or a C1 to C5 alkyl group;
m and p are each independently 0 to 10; and
n is 0 or 1.

In some embodiments, $R_1$ is a substituted or unsubstituted C6 to C10 aromatic hydrocarbon group, or a group represented by *-$R_4$-$R_5$, wherein $R_5$ is a polymerizable group, such as a (meth)acrylate group.

In some embodiments, $R_1$ is a phenyl group, or is*-$R_4$-$R_5$, wherein $R_4$ is a C3 to C6 alkylene group in which at least one hydrogen atom is substituted with a fluorine atom.

In some embodiments, $R_2$ and $R_3$ are each independently an unsubstituted or fluorine-substituted C1 to C3 alkylene group, or a fluorine-substituted C1 to C5 oxyalkylene group.

In some embodiments, $R_1$ is a substituted or unsubstituted C6 to C10 aryl group; and $R_2$ and $R_3$ are each independently an unsubstituted or fluorine-substituted C1 to C3 alkylene group or a fluorine-substituted C1 to C5 oxyalkylene group; or *-$R_4$-$R_5$, wherein $R_5$ is a (meth)acrylate group.

In some embodiments, n is 1.

In some embodiments, the electrolyte comprises a polymerization product of one or monomers independently represented by Formula 1-1, Formula 1-2, and Formula 1-3:

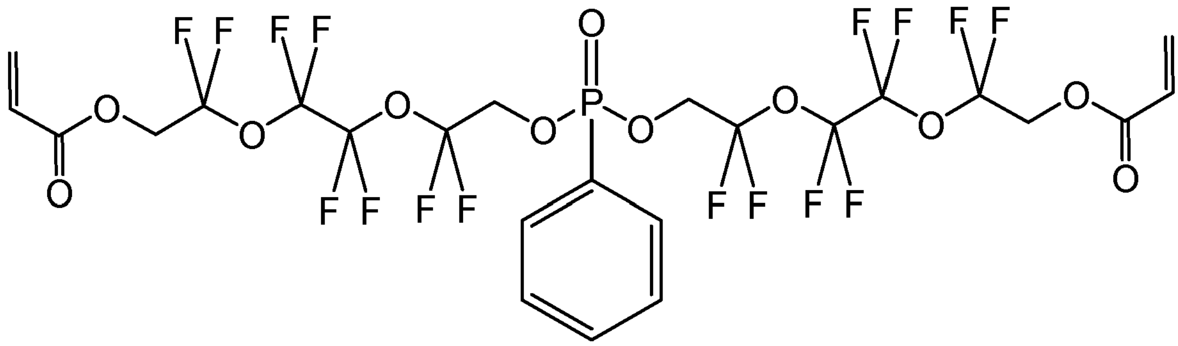

[Formula 1-1]

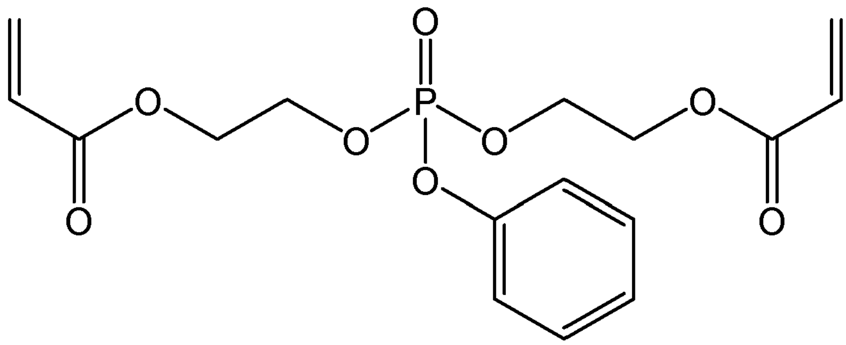

[Formula 1-2]

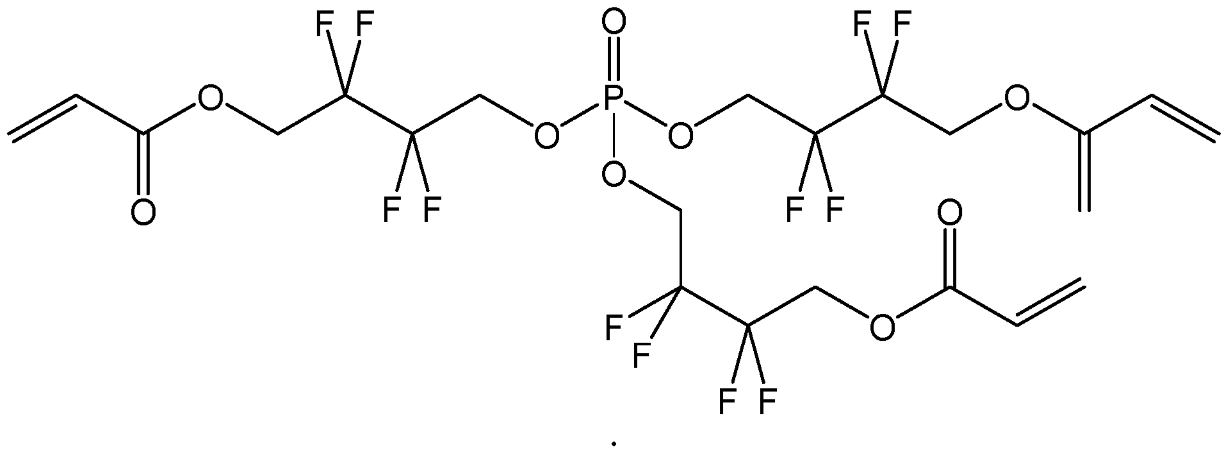

[Formula 1-3]

A flame-retardant compound may be formed by polymerizing one or more monomers for an electrolyte as described according to any embodiment. The flame-retardant compound and a lithium salt may be incorporated into an electrolyte for a secondary battery.

In some embodiments, the electrolyte is composite electrolyte comprising a porous matrix, which may comprise an organic polymer and an inorganic electrolyte. In some embodiments, the inorganic electrolyte comprises an oxide-based solid electrolyte.

In some embodiments, the electrolyte comprises about 1% by weight to about 30% by weight of the flame-retardant compound based on the total weight of the electrolyte. In some embodiments, the electrolyte comprises about 1% by weight to about 15% by weight of the flame-retardant compound based on the total weight of the electrolyte. In some embodiments, the electrolyte comprises about 5% by weight to about 15% by weight of the flame-retardant compound based on the total weight of the electrolyte.

A lithium secondary battery prepared using the electrolyte described herein may comprise: a cathode; an anode disposed opposite to the cathode; and an electrolyte layer disposed between the cathode and the anode, and an electrolyte, as described herein.

An electrolyte for a secondary battery according to exemplary embodiments may be made by preparing a first mixed solution comprising one or more monomers for an electrolyte (e.g., a compound represented by any one or more of Formula 1-1, 1-2, and 1-3) and an electrolyte solution. The first mixed solution may then be cured to produce the electrolyte.

In some embodiments, such as those employing a porous membrane, the first mixed solution may further comprise an organic polymer and an inorganic electrolyte. In certain embodiments, the inorganic electrolyte comprises an oxide-based solid electrolyte.

In some embodiments, the first mixed solution comprises about 1% to about 30% by weight, or about 1% to about 20% by weight, or about 5% to about 15% by weight, of the monomer for an electrolyte based on the total weight of the first mixed solution.

In some embodiments, the monomer comprises a thermally reactive functional group and the first mixed solution further comprises a thermal initiator, and wherein curing comprises heat-treating the first mixed solution.

In some embodiments, the monomer comprises a photo-reactive functional group and the first mixed solution further comprises a photo-initiator, and the curing comprises irradiating the first mixed solution with light.

By using the monomers as disclosed herein to prepare an electrolyte for a secondary battery, the electrolyte may have improved ignition stability and therefore secondary batteries prepared with the same may be self-extinguishing.

## BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a schematic view illustrating the structure of an electrolyte layer for a secondary battery according to exemplary embodiments.

FIG. 2 is a schematic flowchart for describing processes of a method of preparing an electrolyte for a secondary battery according to exemplary embodiments; and

FIG. 3 is a schematic cross-sectional view illustrating an electrode cell according to exemplary embodiments.

## DETAILED DESCRIPTION

According to exemplary embodiments, electrolyte monomers, a method of preparing an electrolyte for a secondary battery comprising the same, and an electrolyte for a secondary battery prepared using the method are provided. In addition, a lithium secondary battery comprising an electrolyte layer containing the electrolyte for a secondary battery is also provided.

Hereinafter, embodiments of the present disclosure will be described in detail. However, these are merely illustrative, and the present disclosure is not limited to the specific embodiments described by way of example.

Unless otherwise defined herein, when a portion such as a layer, film, thin-film, region, or plate, or the like, is present "on" or "above" another portion, it may include not only the case where the portion is present "directly on" the other portion, but also the case where another portion is present between them.

If an isomer exists for a compound represented by a formula used herein, the formula refers both to that which is depicted, as well as all isomers thereof.

The term "polymerizable functional group" as used herein refers to a functional group that enables a polymerization reaction with another compound, and may be, for example, a functional group comprising a carbon-carbon double bond. For example, the polymerizable functional group may include a (meth)acrylate group, a vinyl group, an allyl group, and the like.

The term "substituted or unsubstituted Ca to Cb Y group" as used herein means that the Y group in an unsubstituted state has a to b carbon atoms and does not include the carbon number of a substituent substituted on the Y group.

The term "aromatic hydrocarbon group" as used herein refers to a functional group that has overall aromaticity or a functional group comprising an aromatic ring, such as a benzene ring, within the functional group, and may include, for example, a substituted or unsubstituted aryl group (C6-C12), a substituted or unsubstituted arylalkyl group (C6-C12), a substituted or unsubstituted alkylaryl group (C6-C12) and the like.

The term "oxyalkylene group" as used herein refers to a functional group in which any one of the methylene groups ($-CH_2-$) of a straight-chain or branched-chain saturated hydrocarbon is substituted with an oxygen atom, and may include, for example, an oxygen-alkylene group structure represented by "$-O-C_nH_{2n}-$" or "$C_nH_{2n}-O-C_nH_{2n}-$".

The term "substituted" as used herein may mean that at least one of the hydrogen atoms of a compound is substituted with a substituent such as a halogen group, a hydroxyl group, a heteroalkyl group (C1-C5), a heterocycloalkyl group (C1-C5), a heteroaryl group (C6-C12), an amine group, a nitrile group, a nitro group, a silyl group, or the like.

The terms "heteroalkyl group," "heterocycloalkyl group," and "heteroaryl group" as used herein may mean that at least one of the carbon atoms of an alkyl group, a cycloalkyl group, and an aryl group is substituted with at least one selected from the group consisting of nitrogen, oxygen, and sulfur, respectively.

The term "unsubstituted" as used herein may mean that none of the hydrogen atoms of the compound are substituted.

The term "unsubstituted alkylene group" as used herein may refer to a saturated hydrocarbon group in which none of the hydrogen atoms included in the alkylene group are substituted with other atoms or molecules.

The term "fluorine-substituted" as used herein may mean that at least one of the hydrogen atoms of a compound is substituted with fluorine (F).

The term "flame retardancy" as used herein refers to the performance of preventing or suppressing combustion whereby a sample burns while in contact with a flame (ignition source) but self-extinguishes once the flame is removed. The flame retardancy may be evaluated based on the time it takes for the flame to be extinguished after removing the torch used to supply a flame with a certain heat amount to the sample for 1 second or more. The shorter the time it takes for the flame to be extinguished, the better the flame retardancy is evaluated to be.

Specifically, the term "flame retardant compound" as used herein may be a compound which, when glass fiber cut to 16 pi is impregnated with the flame retardant compound and cured as needed, and then ignited by supplying a flame of a constant heat amount for 1 second or more using a torch and the torch is removed, exhibits an extinguishing time (s/g) relative to the mass of the sample of 100 s/g or less, for example 95 s/g or less.

One example of an electrolyte monomer that may be used to manufacture an electrolyte for a secondary battery is represented by Formula 1 below.

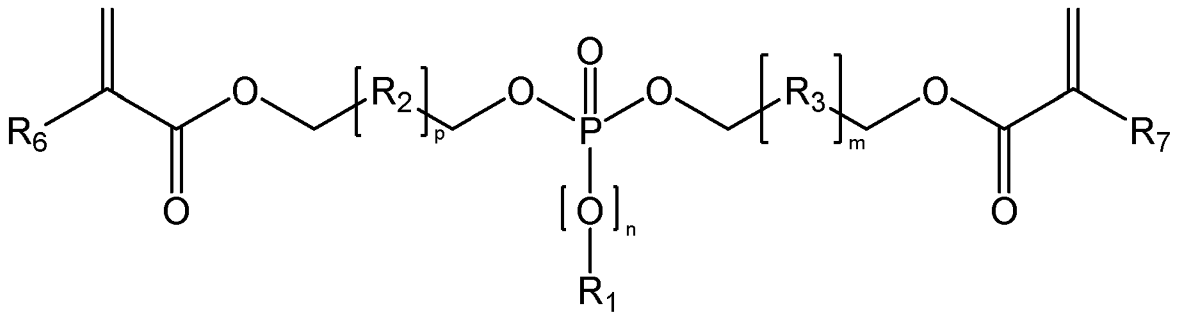

[Formula 1]

In exemplary embodiments, in Formula 1, $R_1$ is a substituted or unsubstituted C6 to C12, C6 to C10, or C6 to C8 aromatic hydrocarbon group. Accordingly, the flame retardancy of an electrolyte comprising a polymer or copolymer of a compound represented by Formula 1 may be improved.

In some embodiments, $R_1$ is a substituted or unsubstituted C6 to C12, C6 to C10, or C6 to C8 aryl group. For example, $R_1$ may be a substituted or unsubstituted phenyl group, benzyl group, tolyl group, xylyl group, naphthyl group, or the like. In certain embodiments, $R_1$ is an unsubstituted phenyl group. In certain embodiments, incorporating an aryl group at the $R_1$ position in a compound represented by Formula 1 improves heat resistance and structural stability of a polymer or copolymer formed from the compound represented by Formula 1.

In other embodiments, $R_1$ is *-$R_4$-$R_5$, wherein * represents the bond to the adjacent oxygen atom. In some embodiments, $R_4$ is a C3 to C12 alkylene group in which at least one hydrogen atom is substituted with a fluorine atom. For example, $R_4$ may be a C3 to C10, C3 to C8, or C3 to C6 alkylene group in which at least one hydrogen atom is substituted with a fluorine atom. In certain embodiments, incorporating a fluorocarbon at the $R_1$ position in a compound represented by Formula 1 improves heat resistance and structural stability of a polymer or copolymer formed from the compound represented by Formula 1.

In some embodiments, $R_1$ is a substituted or unsubstituted C6 to C10 aromatic hydrocarbon group, or *-$R_4$-$R_5$, wherein $R_4$ is a C3 to C12 alkylene group in which at least one hydrogen atom is substituted with a fluorine atom, $R_5$ is a (meth)acrylate group, and * represents the bond to the adjacent oxygen atom.

In some embodiments, $R_1$ is a phenyl group, or *-$R_4$-$R_5$, wherein $R_4$ is a C3 to C6 alkylene group in which at least one hydrogen atom is substituted with a fluorine atom, $R_5$ is a (meth)acrylate group, and * represents the bond to the adjacent oxygen atom.

In some embodiments, $R_5$ is a polymerizable functional group. For example, $R_5$ may comprise an acrylate, vinyl, or allyl group. In certain embodiments, $R_5$ comprises a (meth)acrylate group. In certain embodiments, incorporating a polymerizable functional group at the $R_1$ position permits more extensive polymerization of the electrolyte monomer, and results in a denser network polymer, thereby further improving the flame retardancy.

Accordingly, a compound represented by Formula 1 above may include two or more polymerizable groups, e.g, (meth)acrylate groups, for example, when $R_5$ comprises a meth(acrylate) group. In such embodiments, a compound of Formula 1 may be a thermosetting or photosetting material and an electrolyte comprising a polymer or copolymer formed from a compound represented by Formula 1 may be a crosslinked polymer or a network polymer, which may be formed using thermosetting or photosetting techniques, which may further improve flame retardancy of an electrolyte comprising a polymer or copolymer formed from the compound represented by Formula 1.

In exemplary embodiments, in Formula 1, $R_2$ and $R_3$ are each independently a substituted or unsubstituted C1 to C6 alkylene group, or a substituted or unsubstituted C1 to C7 oxyalkylene group comprising one, two, or three oxygen atoms. For example, $R_2$ and $R_3$ may each independently be an unsubstituted or fluorine-substituted C1 to C5, C1 to C4, or C1 to C3 alkylene group. In another example, $R_2$ and $R_3$ may each be independently a fluorine-substituted C1 to C5, C1 to C4, or C1 to C3 oxyalkylene group. In another example, $R_2$ and $R_3$ may each independently be an unsubstituted or fluorine-substituted C3 to C7 oxyalkylene group comprising one or two oxygen atoms. In certain embodiments, each of the hydrogen atoms in the fluorine-substituted alkylene or oxyalkylene are substituted with fluorine. In other embodiments, at least 80% of the hydrogen atoms in the fluorine-substituted alkylene or oxyalkylene are substituted with fluorine. In yet other embodiments, at least 50% hydrogen atoms in the fluorine-substituted alkylene or oxyalkylene are substituted with fluorine.

In some embodiments, $R_2$ and $R_3$ are each independently an unsubstituted or fluorine-substituted C1 to C3 alkylene group, or a fluorine-substituted C1 to C5 oxyalkylene group. Accordingly, the flame retardancy of the electrolyte comprising a polymer or copolymer of the compound represented by Formula 1 may be further improved.

In certain embodiments, incorporating an alkylene group or oxyalkylene group, particularly those that are at least partially fluorinated, at the $R_2$ and $R_3$ positions in a compound represented by Formula 1 improves flame retardancy and

self-extinguishing properties of an electrolyte a polymer or copolymer formed from the compound represented by Formula 1. Further, oxygen atoms in the oxyalkylene group may further promote the dehydration reaction of polymetaphosphate and the formation of carbon compounds.

In exemplary embodiments, m and p are each independently 0 to 10. In certain embodiments, p and n are each 2. In certain embodiments, p and n are each 0.

In other embodiments, $R_6$ and $R_7$ are each independently hydrogen or a C1 to C5 alkyl group. For example, in certain embodiments, one or both of $R_6$ and $R_7$ are hydrogen. For example, in other embodiments, $R_6$ and $R_7$ are independently hydrogen or methyl.

The compound represented by Formula 1 above comprises phosphorous in the form of a phosphate group or a phosphonate group. Without being bound by any particular theory, incorporating phosphorus into the compound of Formula 1 facilitates thermal decomposition when ignited, to generate polymetaphosphate. As polymetaphosphate is generated, a carbon compound (e.g., charcoal) is generated by dehydration, esterification, and dehydrogenation reactions of the polymetaphosphate. The polymetaphosphate may form a protective layer and the carbon compound may form a carbon film, thus a material, e.g., polymer formed from the compound represented by Formula 1 above may block oxygen and heat under high-temperature conditions and prevent ignition and combustion. Accordingly, an electrolyte comprising a polymer or copolymer formed from a compound represented by Formula 1 above may have excellent self-extinguishing properties. These properties may be further improved by increasing phosphorus content in a compound represented by Formula 1 to further promote the generation of polymetaphosphate and carbon compounds upon ignition.

In exemplary embodiments, n is 0 or 1. For example, n may be 1 and the compound represented by Formula 1 comprises a phosphate group to promote generation of polymetaphosphate and carbon compounds and improve self-extinguishing properties of an electrolyte comprising a polymer or copolymer formed from such a compound.

In some embodiments of Formula 1, $R_1$ is a substituted or unsubstituted C6 to C10 aryl group; $R_2$ and $R_3$ are each independently an unsubstituted or fluorine-substituted C1 to C3 alkylene group or a fluorine-substituted C1 to C5 oxyalkylene group; or $R_1$ is *-$R_4$-$R_5$, wherein $R_4$ is a C3 to C12 alkylene group in which at least one hydrogen atom is substituted with a fluorine atom, $R_5$ is a (meth)acrylate group, and * represents the bond to the adjacent oxygen atom.

In exemplary embodiments, the compound represented by Formula 1 may include equivalents thereof. For example, at least one hydrogen atom bonded to a carbon atom in Formula 1 may be further substituted with one or more moieties considered chemically equivalent or similar by those of skill in the art, for example, at least one hydrogen atom bonded to a carbon atom in Formula 1 may be further substituted with deuterium or an alkyl group having 1 to 5 carbon atoms.

In addition, unwanted chain ignition of the electrolyte may be promoted by free radicals (e.g., hydrogen radicals) generated by the ignition of an organic solvent, or the like. Without being bound by any particular theory, it is believed that the phosphorus atom included in the compound represented by Formula 1 helps suppress chain ignition by removing the free radicals (e.g., hydrogen free radicals). Accordingly, the electrolyte comprising the compound represented by Formula 1 above and a polymer or copolymer thereof may have high self-extinguishing properties and improved flame retardancy.

In one embodiment, the compound represented by Formula 1 may be represented by Formula 1-1 below.

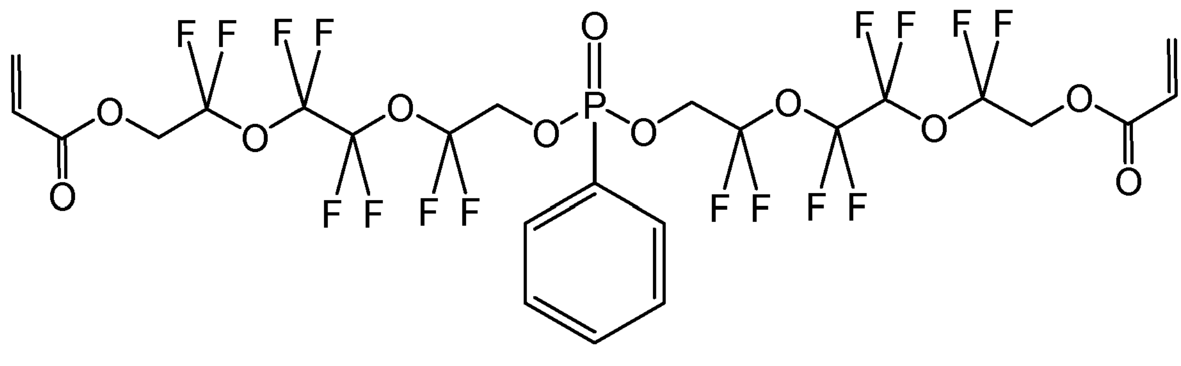

[Formula 1-1]

The compound represented by Formula 1-1 below comprises a phenyl group at the $R_1$ position, a fluorine-substituted oxyalkylene group at the $R_2$ and $R_3$ positions, and a phosphonate group. Accordingly, an electrolyte comprising a polymer or copolymer of the compound represented by Formula 1-1 may have improved flame retardancy and therefore effectively suppress any chain ignition caused by increased temperature or ignition conditions.

An electrolyte for use in a secondary battery may be prepared from the compound represented by Formula 1-1, or any equivalent thereof. For example, at least one hydrogen atom bonded to a carbon atom of Formula 1-1 may be further

substituted with one or more moieties considered chemically equivalent or similar by those of skill in the art, for example, at least one hydrogen atom bonded to a carbon atom of Formula 1-1 may be further substituted with deuterium or an alkyl group having 1 to 5 carbon atoms.

In one embodiment, the compound represented by Formula 1 may be a compound represented by Formula 1-2 below and therefore, may be used to manufacture an electrolyte for a secondary battery.

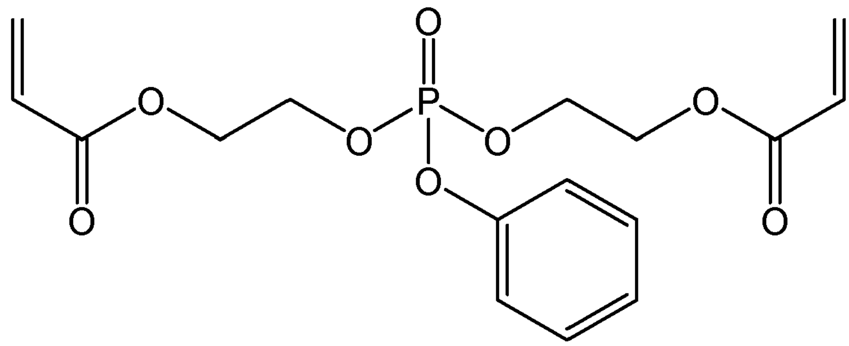

[Formula 1-2]

The compound represented by Formula 1-2 includes both a phenyl group at the $R_1$ position, a phosphate group, and a higher phosphorus content than, e.g., a compound of Formula 1-1. Accordingly, electrolyte comprising a polymer or copolymer formed from the compound represented by Formula 1-2 may be able to more efficiently form a protective layer derived from phosphorus, and further suppress a chain ignition reaction.

An electrolyte for use in a secondary battery may be prepared from the compound represented by Formula 1-2, or any equivalent thereof. For example, at least one hydrogen atom bonded to a carbon atom of Formula 1-2 may be further substituted with one or more moieties considered chemically equivalent or similar by those of skill in the art, for example, at least one hydrogen atom bonded to a carbon atom of Formula 1-2 may be further substituted with deuterium or an alkyl group having 1 to 5 carbon atoms.

In one embodiment, the compound represented by Formula 1 may be a compound represented by Formula 1-3 below and therefore, may be used to manufacture an electrolyte for a secondary battery.

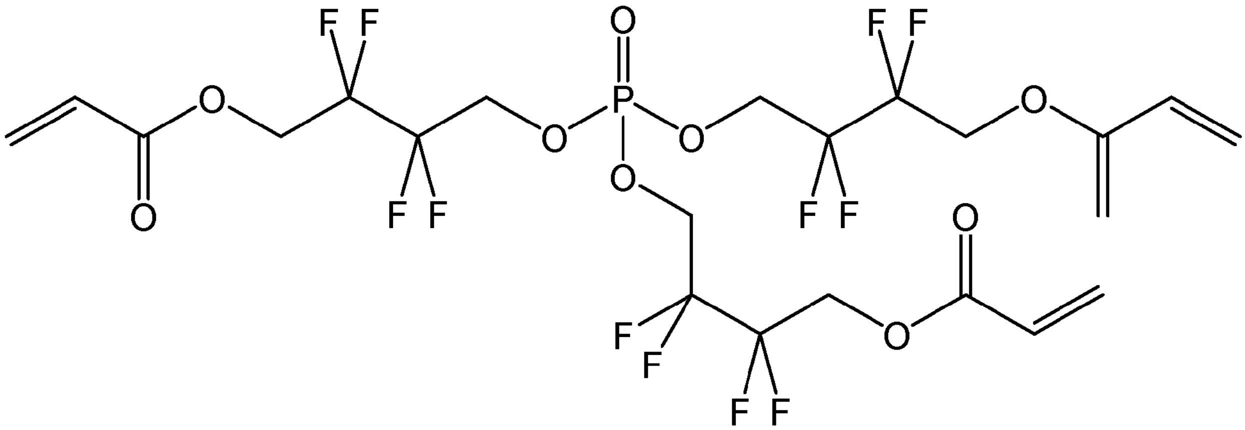

[Formula 1-3]

The compound represented by Formula 1-3 comprises three acrylate groups, a fluorine-substituted alkylene group at the $R_2$ and $R_3$ positions, and a phosphonate group. Accordingly, the flame retardancy of the electrolyte comprising a polymer or copolymer of the compound represented by Formula 1-3, which may have a dense crosslinked structure, may be further improved, and the chain ignition phenomenon may be further suppressed. Accordingly, electrolyte comprising a polymer or copolymer formed from the compound represented by Formula 1-3 may have a denser crosslinked structure (e.g., as compared to a compound of Formula 1-1 or Formula 1-2), and more effectively suppress a chain ignition reaction.

An electrolyte for use in a secondary battery may be prepared from the compound represented by Formula 1-3, or any equivalent thereof. For example, at least one hydrogen atom bonded to a carbon atom of Formula 1-3 may be further substituted with one or more moieties considered chemically equivalent or similar by those of skill in the art, for example, at

least one hydrogen atom bonded to a carbon atom of Formula 1-3 may be further substituted with deuterium or an alkyl group having 1 to 5 carbon atoms.

In some embodiments, the compound represented by Formula 1-1, the compound represented by Formula 1-2, and the compound represented by Formula 1-3 may be used as electrolyte monomers in of two or more thereof combination (e.g., to generate a flame-retardant copolymer). The co-polymer may be a block copolymer or a random copolymer. A polymer or copolymer formed from one or more of the monomer compounds represented by Formulas 1-1, 1-2, and 1-3 may be crosslinked and/or a network polymer or copolymer. By generating polymers and copolymers from monomer compounds represented by Formulas 1-1, 1-2, and 1-3, the flame retardancy of the electrolyte comprising the polymer may be improved. In certain embodiments, the electrolyte does not comprise any trimethylolpropane ethoxylate triacrylate.

**FIG. 1** depicts an exemplary embodiment of an electrolyte **100** comprising a flame-retardant compound **110,** which may comprise or consist of a polymer such as the above-described polymer to suppress side reactions between the flame-retardant compound **110** and the electrolyte **100.** Additionally, inclusion of a fluorine or phosphorus-containing functional group the flame-retardant compound **110** may block oxygen during combustion and prevent thermal runaway.

In some embodiments, the flame-retardant compound **110** comprises or consists of a polymer or copolymer of one or more electrolyte monomers comprising a thermally reactive functional group and/or a photoreactive functional group. For example, a suitable electrolyte monomer may include an acrylate group which may function as a thermally reactive functional group or a photoreactive functional group, such as in Formula 1-3.

In some embodiments, the flame-retardant compound **110** comprises or consists of a polymerization product of a compound represented by Formula 1. For example, the polymer may be formed by polymerizing the (meth)acrylate groups in the compound represented by Formula 1 and/or by polymerizing the (meth)acrylate groups in the compound represented by Formula 1 and a polymerizable function group at position $R_5$ in the compound represented by Formula 1.

In one embodiment, the flame-retardant compound comprises a compound represented by Formula 2 below.

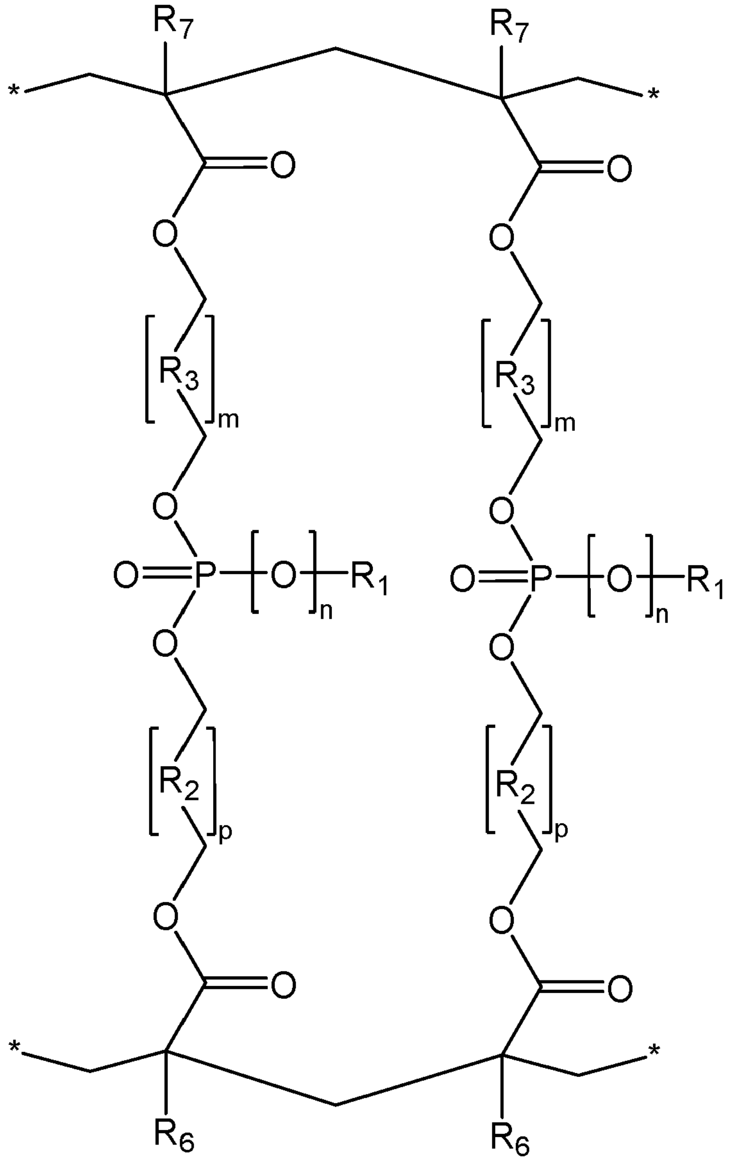

[Formula 2]

In Formula 2, $R_1$, $R_2$, $R_3$, $R_6$, $R_7$, m, n, and p may be the same as described above with reference to Formula 1. For example, an electrolyte may comprise a flame-retardant compound comprising or consisting of a crosslinked polymer, or a network polymer represented by Formula 2 as a unit structure.

An electrolyte for use in a secondary battery may comprise a unit structure represented by Formula 2, or any equivalent thereof. For example, at least one hydrogen atom bonded to a carbon atom of Formula 2 may be further substituted with one or more moieties considered chemically equivalent or similar by those of skill in the art, for example, at least one hydrogen atom bonded to a carbon atom of Formula 2 may be further substituted with deuterium or an alkyl group having 1 to 5 carbon atoms.

In certain embodiments, the electrolyte for a secondary battery according to an exemplary embodiment (hereinafter, also referred to as "electrolyte") may comprise or consist of the flame-retardant compound **110** (comprising or consisting of a polymerization product of one or more electrolyte monomer(s) as disclosed herein) and a lithium salt.

The anion of the lithium salt, which may be expressed as $Li^+X^-$, may be selected from, for example, the group consisting of $F^-$, $Cl^-$, Br, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, or the like. In certain embodiments, $LiPF_6$ is used as a lithium salt.

In some embodiments, the electrolyte comprises about 1% by weight ("wt%") to about 30 wt%, about 3 wt% to about 30 wt%, about 5 wt% to about 25 wt%, about 5 wt% to about 20 wt%, or about 5 wt% to about 15 wt% of the flame-retardant compound **110,** based on the total weight of the electrolyte. In certain embodiments, the electrolyte comprises about 5 wt% to about 15 wt% of the flame-retardant compound. In certain embodiments, the electrolyte comprises about 10 wt% to about 20 wt% of the flame-retardant compound. Within these ranges, the ionic conductivity of the electrolyte **100** may be improved, thereby imparting improved flame retarding properties.

In some embodiments, the electrolyte **100** comprises or consists of a flame-retardant compound **110** (as described herein), a lithium salt, and an electrolyte solution. In some embodiments, the electrolyte solution comprises an organic solvent. For example, the organic solvent may comprise carbonate organic solvents such as propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), and vinylene carbonate (VC), or the like; or solvents such as dimethyl sulfoxide (DMSO), acetonitrile (ACN), dimethoxyethane (DME), diethoxyethane, sulfolane, gamma-butyrolactone (GBL), propylene sulfite, and tetrahydrofuran (THF). These may be used alone or in combination of two or more thereof. In one embodiment, the organic comprises EC, EMC, or a mixture of both, such as is described in the Examples. In one embodiment, the organic solvent is a carbonate-based organic solvent, which may, in certain embodiments, impart improved electrical stability and chemical stability to electrolyte for use in a secondary battery.

In one embodiment, the electrolyte solution may further comprise an additive. Suitable additives may comprise a cyclic carbonate compound, a fluorine-substituted cyclic carbonate compound, a sultone compound, a cyclic sulfate compound, a cyclic sulfite compound, a phosphate compound, a borate compound, or the like. Examples of suitable cyclic carbonate compounds include, but are not limited to, vinylene carbonate, vinyl ethylene carbonate (VEC), and the like. Examples of suitable fluorine-substituted cyclic carbonate compounds include, but are not limited to, fluoroethylene carbonate (FEC), and the like. Examples of suitable sultone compounds include, but are not limited to, 1,3-propane sultone, 1,3-propene sultone, 1,4-butane sultone, and the like. Examples of suitable cyclic sulfate compound include, but are not limited to, 1,2-ethylene sulfate, 1,2-propylene sulfate, and the like. Examples of suitable cyclic sulfite compound include, but are not limited to, ethylene sulfite, butylene sulfite, and the like. Examples of suitable phosphate compound include, but are not limited to, lithium difluoro bis-oxalato phosphate, lithium difluoro phosphate, and the like. Examples of suitable borate compound include, but are not limited to, lithium bis(oxalate) borate, and the like.

In some embodiments, the electrolyte comprises or consists of a flame-retardant compound **110** (as described herein), a lithium salt, and an electrolyte solution. In certain embodiments, the flame-retardant compound is polymerized within a porous matrix, such as a porous polymer. In such embodiments, wherein the flame retardant **110** is comprised within the pores. In certain embodiments, the porous polymer is a separation membrane. One of skill in the art will be familiar with methods for preparing separation membranes. In certain embodiments, the separation membrane comprises or consists of polyethylene and/or polypropylene. In such embodiments, the reduced resistance of the electrolyte results in improved ionic conductivity and flame retardancy of the electrolyte **100.**

In some embodiments, the electrolyte comprises a porous composite electrolyte (PCE), comprising a porous matrix. In such embodiments, the electrolyte comprises or consists of a flame-retardant compound **110** (as described herein), a lithium salt, an electrolyte solution, and a PCE. In some embodiments, the porous matrix is a film. In some embodiments, the PCE is an organic polymer electrolyte (POPE). In such embodiments, the electrolyte may comprise or consist of a flame-retardant compound **110** (as described herein), a lithium salt, an electrolyte solution, and an organic polymer electrolyte (POPE). In some embodiments, the PCE may comprise or be prepared an organic polymer and an inorganic electrolyte. In certain embodiments, the inorganic electrolyte is physically bound within (e.g., polymerized within the pores of) the porous matrix comprising the organic polymer.

The organic polymer may be an ion conductive polymer. For example, the organic polymer may comprise repeating units of ether-based, styrene-based, or fluorinated hydrocarbon-based groups. In some embodiments, the organic polymer comprises at least one selected from the group consisting of polyvinylidene fluoride (PVDF), polystyrene (PS), polyether sulfone (PES), polyurethane (PU), polyethylene oxide (PEO), polyvinylidene fluoride-co-hexafluoropropylene (PVDF-co-HFP), polyimide (PI), polymethyl methacrylate (PMMA), polyvinyl chloride (PVC), polyvinyl alcohol (PVA), polyacrylonitrile (PAN), polyethyl methacrylate (PEMA), polycaprolactone (PCL), and polyvinyl pyrrolidone (PVP). In one embodiment, the organic polymer may comprise at least one selected from the group consisting of PVDF, PS, PES, and PU. In certain implementations, using an ion-conductive polymer, such as any of the above, improves mobility of lithium-ion conduction within the porous matrix, thereby enhancing ionic conductivity.

The inorganic electrolyte may be an oxide-based solid electrolyte, comprising, for example, an ion conductive compound comprising a metal and/or oxygen. For example, a suitable oxide-based solid electrolyte may comprise one or more LLTO™ ( Lithium Lanthanum Titanium Oxide) compounds; LLZO™ (Lithium Lanthanum Zirconium Oxide) compounds; or LLZTO™ (Lithium Lanthanum Zirconium Tantalum Oxide) compounds, such as $Li_{6.4}La_3Zr_{1.4}Ta_{0.6}O_{12}$, $Li_6La_2CaTa_2O_{12}$, $Li_6La_2ANb_2O_{12}$ (wherein A is Ca or Sr), $Li_2Nd_3TeSbO_{12}$, $Li_3BO_{2.5}N_{0.5}$, $Li_9SiAlO_8$; LAGP™ ( Lithium Aluminum Germanium Phosphate) compounds; LATP™ (Lithium Aluminum Titanium Phosphate) compounds such as $Li_{1+x}Ti_{2-x}Al_xSi_y(PO_4)_3$ (wherein $0 \leq x \leq 1$, $0 \leq y \leq 1$), $LiAl_xZr_{2-x}(PO_4)_3$ (wherein $0 \leq x \leq 1$, $0 \leq y \leq 1$), and $LiTi_xZr_{2-x}(PO_4)_3$ (wherein $0 \leq x \leq 1$, $0 \leq y \leq 1$); LISICON™ (Lithium Super Ionic CONductor) compounds, LIPON™ (Lithium Phosphorous OxyNitride) compounds, perovskite compounds, NASICON™ (Na Super Ionic CONductor ) compounds, or metal oxides

such as $Al_2O_3$, $ZnO_2$, $Ce_2O_2$, $TiO_2$, $ZrO_2$, $HfO_2$, $MnO_2$, MgO, $WO_2$, and $V_2O_5$. In one embodiment, the inorganic electrolyte is an oxide-based solid electrolyte comprising lithium, such as LLTO™ compound, an LLZO™ compound (e.g., a garnet-type LLZO™ compound), an LLZTO™ compound, a NASICON™ compound, a LATP™ compound, a perovskite compound, or the like. By using an oxide-based solid electrolyte, such one comprising lithium, lithium dendrite growth may be suppressed, ionic conductivity and mechanical strength of the electrolyte 100 may be improved, thereby enhancing high-temperature stability and cycle life characteristics of the electrolyte.

**FIG. 2** is an exemplary flowchart depicting a process of preparing an improved electrolyte for a secondary battery according to the present disclosure. In **FIG. 2,** a first mixed solution is prepared at step S10. The first mixed solution comprises at least one or more electrolyte monomers (e.g, one or more monomers of Formulas 1-1, 1-2, and 1-3), a lithium salt, and an electrolyte solution. In embodiments wherein the electrolyte further comprises a PCE, such as a POPE, the components of the PCE (or POPE) may be combined into the first mixed solution, such that it comprises or consists of the one or more electrolyte monomers (e.g, one or more monomers of Formulas 1-1, 1-2, and 1-3), one or more lithium salts, the electrolyte solution, an organic polymer and an inorganic electrolyte. In other embodiments, the PCE (or POPE) may be prepared first, and then added as a porous matrix to the first mixed solution, such that the first mixed solution comprises or consists of the one or more electrolyte monomers (e.g, one or more monomers of Formulas 1-1, 1-2, and 1-3), one or more lithium salts, the electrolyte solution, and the PCE or POPE.

In embodiments where the porous matrix is prepared first and then added to the first mixed solution, the organic polymer, the inorganic electrolyte, a first solvent, and a second solvent may be combined, and thereafter, the solvents may be removed.

The type of first and second solvents is not particularly limited. In one embodiment, the organic polymer is soluble in the first solvent, but not in the second solvent. Accordingly, the organic polymer may be dissolved in the first solvent, not be dissolved (or not substantially dissolved) in the second solvent. In some embodiments, the first solvent is miscible with the second solvent. For example, the first solvent and the second solvent may be mixed or blended. Examples of suitable first solvents include, but not limited to, THF, 2-methyltetrahydrofuran (2-Me-THF), N-methyl-2-pyrrolidone (NMP), 1,3-dioxolane, vinylene carbonate (VC), or the like. These may be used alone or in combination of two or more thereof. In one embodiment, the first solvent is or comprises tetrahydrofuran. Examples of suitable second solvents include, but are not limited to, heptane, octane, nonane, decane, dodecane, 2,2,4-trimethylpentane and the like. These may be used alone or in combination of two or more thereof. In one embodiment, the second solvent is or comprises octane.

In certain embodiments, solvent removal is performed by casting the second mixed solution onto a substrate (e.g., a glass substrate, a plastic substrate, or the like.), and then applying heat to remove solvent.

In one embodiment, removing the solvent from the second mixed solution comprises removing the first solvent at a first temperature and removing the second solvent at a second temperature. For example, the first solvent in the second mixed solution may be removed, and then the second solvent may be removed to prepare a porous matrix. The first solvent removal and the second solvent removal may be performed sequentially, or the second solvent removal may be performed after a certain period has elapsed after the first solvent removal. Accordingly, the first solvent may be removed first, and then the second solvent may be removed to yield a porous matrix, which may be added to the first solution.

In certain embodiment, such as embodiments wherein the one or more electrolyte monomer(s) comprise a thermo- or photo-reactive functional group, the first mixed solution may further comprise a thermal initiator and/or a photo-initiator as appropriate. For example, a first mixed solution may comprise about 0.5 parts by weight ("wt parts") to about 2 wt parts of a thermal initiator and/or a photo-initiator based on 100 wt parts of the first mixed solution. Examples of suitable thermal initiators include, but are not limited to, azo compounds such as 2,2-azobis(2-cyanobutane), 2,2-azobis(methylbutyronitrile), 2,2'-azobisobutyronitrile (AIBN), azobisdimethyl-valeronitrile (AMVN), dimethyl 2,2'-azobis(2-methylpropionate), 2,2'-azobis(2,4-dimethylvaleronitrile), tert-butyl peroxypivalate, di(3,5,5-trimethylhexanoyl)peroxide, tert-butyl peroxy-2-ethylhexanoate, and the like, or peroxide compounds such as benzoyl peroxide, acetyl peroxide, dilauryl peroxide, di-tert-butyl peroxide, cumyl peroxide, hydrogen peroxide, and the like. Examples of suitable photo-initiators include, but are not limited to, acyl phosphines, such as 2-hydroxy-2-methyl-1-phenylpropan-1-one (HMPP), benzoin ether, dialkyl acetophenone, hydroxyalkyl ketone, phenyl glyoxylate, benzyl dimethyl ketal, 2,4,6-trimethyl-benzoyl-trimethyl phosphine oxide, or the like, or $\alpha$-aminoketones.

Still referring to FIG. 2, the first mixed solution may then be cured at step S20 to polymerize the one or more electrolyte monomers, and, if not yet polymerized, the organic polymer (as part of a PCE or POPE). In certain embodiments, the first mixed solution is combined with a porous membrane, such as a separation membrane, to impregnate the separation membrane, and thereafter cured to generate a porous electrolyte structure disposed within the structure of the separation membrane.

In certain embodiments, the electrolyte comprises substantially the same weight percent of flame-retardant compound as the amount of electrolyte monomer(s) included in the first mixed solution. That is, in some embodiments, the weight change (decrease or increase) during the curing of the first mixed solution may be substantially negligible (e.g., increase or decrease about 0.0001 wt%, or about 0.00001 wt% or less, based on the total weight of the electrolyte monomer(s)).

The first mixed solution may be cured by any method known suitable in the art. For example, in some embodiments, the first mixed solution is cured through heat treatment. The temperature used to cure the first mixed solution is not particularly limited. In some embodiments, the heat treatment temperature is about 30 °C to about 120 °C, about 60 °C to about 100 °C, or about 70 °C to about 90 °C. As used herein, "about" when used to describe a temperature, means $\pm$ 5 °C, provided the temperature provides the same results (e.g., there is no phase change or degradation within the temperature range encompassed). In some embodiments, the first mixed solution is exposed to heat treatment time for about 20 minutes to about 3 hours, about 30 minutes to about 2 hours, or about 40 minutes to about 1.5 hours. Within the above temperature and time ranges, the one or more electrolyte monomer(s) included in the first mixed solution may be sufficiently polymerized or copolymerized.

In other embodiments, the first mixed solution is cured by irradiating the first mixed solution with light. Accordingly, polymerization or copolymerization of the one or more electrolyte monomer(s) in the first mixed solution may be conducted at a relatively low temperature. In certain embodiments, no source of heat is applied when curing the first mixed solution and the only heat generated during curing is due to the irradiation. Therefore, damage to the polymerized or copolymerized one or more electrolyte monomer(s) that in sometimes occurs during high-temperature heat treatment may be prevented. The wavelength, intensity, and irradiation time of irradiation used to cure the one or more electrolyte monomer(s) in the first mixed solution is not particularly limited and will depend on the specific type of electrolyte monomer(s). For example, in some embodiments, a light having a wavelength of about 250 nm to about 400 nm is used to cure one or more electrolyte monomer(s). In some embodiments, a light having an intensity of about 800 $mW/cm^2$ to about 1100 $mW/cm^2$. In some embodiments, the first mixed solution comprising the one or more electrolyte monomer(s) is subjected to light irradiation for about 5 seconds to about 20 seconds. Within the above wavelength, intensity, and irradiation time ranges, the one or more electrolyte monomer(s) in the first mixed solution may be sufficiently polymerized or copolymerized to generate an electrolyte comprising a suitable flame-retardant compound.

The electrolyte comprising the flame-retardant compound having properties and prepared by any embodiment disclosed herein may be incorporated into an electrode cell, e.g., of a secondary battery. **FIG. 3** is a schematic cross-sectional view illustrating an exemplary electrode cell **200** into which an electrolyte comprising the flame-retardant as described herein is incorporated. In **FIG. 3,** the electrode cell **200** may comprise a cathode **240,** an anode **260** disposed opposite to the cathode **240,** and an electrolyte layer **210** disposed between the cathode **240** and the anode **260.** The cathode **240** may comprise a cathode current collector **235** and a cathode active material layer **230** disposed on at least one surface of the cathode current collector **235.**

The cathode current collector **235** may be comprised of any material, for example, stainless steel, nickel, aluminum, titanium, or any alloy thereof. The cathode current collector **235** may also be comprised of aluminum or stainless steel having a surface treated with carbon, nickel, titanium, or silver. The cathode current collector **235** may have a thickness of, for example, about 10 $\mu$m to about 50 $\mu$m, but it is not limited thereto.

The cathode active material **230** may comprise a compound capable of reversibly intercalating and deintercalating lithium ions. In exemplary embodiments, the cathode active material may comprise a lithium-nickel metal oxide. The lithium-nickel metal oxide may further comprise at least one metal selected from the group consisting of cobalt (Co), manganese (Mn) and aluminum (Al). In some embodiments, the cathode active material or the lithium-nickel metal oxide may comprise a layered structure, or a crystal structure represented by Formula 3 below.

$$Li_xNi_aM_bO_{2+2} \qquad \text{[Formula 3]}$$

In Formula 3, x, a, b, and z may satisfy the following: $0.9 \le x \le 1.2$, $0.6 \le a \le 0.99$, $0.01 \le b \le 0.4$, $-0.5 \le z \le 0.1$. As described above, M comprises Co, Mn, and/or Al.

The chemical structure represented by Formula 3 indicates a bonding relationship between lithium (Li), nickel (Ni), oxygen (O), and metal (M) elements included in the layered structure or crystal structure of the cathode active material but does not exclude inclusion of additional elements. For example, M may include Co and/or Mn, wherein the Co and/or Mn are provided as main active elements of the cathode active material together with Ni, but can encompass introduction of additional elements, such as those described hereinbelow.

In one embodiment, the cathode active material may further comprise one or more auxiliary elements, which are added to the main active elements to enhance chemical stability thereof or the layered structure/crystal structure. The auxiliary element may be incorporated into the layered structure/crystal structure together with the main active elements to form a bond, and it should be understood that the auxiliary element(s) are encompassed within the chemical structure range represented by Formula 3. Suitable auxiliary element include, for example, one or more of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. In certain embodiments, inclusion of one or more auxiliary elements may function as an auxiliary active element, which contributes to the capacity/output activity of the cathode active material together with Co and/or Mn. In one embodiment, aluminum (Al) is included as an auxiliary element/auxiliary active element.

For example, the cathode active material or the lithium-nickel metal oxide may comprise a layered structure or

crystal structure represented by Formula 3-1 below.

$$Li_xNi_aM1_{b1}M2_{b2}O_{2+z} \quad [Formula 3-1]$$

In Formula 3-1, M1 comprises Co, Mn, and/or Al. M2 comprises the one or more auxiliary elements described above. In Formula 3-1, x, a, b1, b2 and z may satisfy the following: $0.9 \leq x \leq 1.2$, $0.6 \leq a \leq 0.99$, $0.01 \leq b1+b2 \leq 0.4$, $-0.5 \leq z \leq 0.1$.

In certain embodiments, a cathode active material may further comprise a coating element or a doping element. For example, elements substantially the same as or similar to the above-described auxiliary elements may be used as a coating element or a doping element, which may be used alone or in combination of two or more thereof, as a coating element or a doping element. A coating or doping element may exist on the surface of the lithium-nickel metal oxide particles or may penetrate through the surface of the lithium-nickel metal composite oxide particles and be incorporated into the bonding structure represented by Formula 2 or Formula 3-1 above.

Employing a high-nickel-content (high-Ni) composition in the cathode active material, in certain embodiments, is associated with the improved output and capacity of a lithium secondary battery. Therefore, in one embodiment, the cathode active material comprises a nickel-cobalt-manganese (NCM)-based lithium oxide to increase the nickel content in the cathode active material, thereby generating a secondary battery with high-capacity cathode, and high-capacity lithium secondary battery.

However, as will be recognized by those skilled in the art, as the content of Ni increases, long-term storage stability and cycle life stability of the cathode or the secondary battery may be relatively reduced, and side reactions with the electrolyte may also increase. However, these deleterious effects of using a high-Ni cathode active material may be mitigated by including Co, and cycle life stability and capacity retention characteristics may be improved using Mn while maintaining desired electrical conductivity of the cathode active material.

In certain embodiments, the NCM-based lithium oxide may comprise of Ni in a molar fraction (e.g., a molar fraction of nickel based on the total number of moles of nickel, cobalt, and manganese) of about 0.6 or more, about 0.7 or more, or about 0.8 or more. In some embodiments, the content of Ni content of the NCM-based oxide is about 0.8 to about 0.95, about 0.82 to about 0.95, about 0.83 to about 0.95, about 0.84 to about 0.95, about 0.85 to about 0.95, or about 0.88 to about 0.95.

In some embodiments, the cathode active material for use in a secondary battery, as disclosed herein, comprises a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material comprises, for example, a manganese (Mn)-rich active material having a chemical structure or crystal structure represented by Formula 4 below, a lithium (Li)-rich layered oxide (LLO)/over lithiated oxide (OLO)-based active material, or a cobalt (Co)-less active material.

$$p[Li_2MnO_3](1-p)[Li_qJO_2] \quad [Formula 4]$$

In Formula 4, p and q may satisfy the following: $0 < p < 1$, $0.9 \leq q \leq 1.2$, and J comprises at least one element selected from the group consisting of Mn, Ni, Co, Fe, Cr, V, Cu, Zn, Ti, Al, Mg, and B.

In other embodiments, the cathode active material is a sodium-based active material or a potassium-based active material. The sodium-based active material may comprise a layered structure or a crystal structure in which Li of Formula 3, Formula 3-1, and/or Formula 4, described above, is substituted with Na and/or K.

In yet other embodiments, the cathode active material is a calcium-based active material. The calcium-based active material may comprise, for example, a calcium-cobalt active material and/or a calcium-phosphate active material.

The cathode active material may be prepared by any method known in the art. For example, a cathode slurry may be prepared by mixing the cathode active material in a solvent. Still referring to **FIG. 3,** a cathode current collector **235** may be coated with the cathode slurry, and then dried and roll-pressed to prepare the cathode active material layer **230.** The coating process may be performed using methods such as gravure coating, slot die coating, simultaneous multilayer die coating, imprinting, doctor blade coating, dip coating, bar coating or casting, or the like, but it is not limited thereto. The cathode active material layer **230** may further comprise a binder, and optionally may further comprise the electrolyte, a conductive material, a thickener, or the like.

Solvents used in the preparation of the cathode active material layer **230** may comprise, for example, NMP, dimethylformamide (DMF), dimethylacetamide (DMA), *N, N*-dimethylaminopropylamine (DMAPA), ethylene oxide (EO), THF, or the like.

The electrolyte included in the cathode active material layer **230** may be any described herein. In one embodiment, the cathode active material comprises an electrolyte comprising an inorganic electrolyte as described herein. In one embodiment, the secondary battery is an all-solid-state battery comprising an electrolyte or inorganic electrolyte as described herein.

The binder may comprise PVDF, poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR), or the like. In one embodiment, a PVDF-based binder is used as a cathode binder.

A conductive material may be included in a cathode active material layer 230 to enhance the conductivity thereof and/or the mobility of lithium ions or electrons. For example, the conductive material may comprise one or more carbon-based conductive materials, such as graphite, carbon black, acetylene black, Ketjen black, graphene, carbon nanotubes, vapor-grown carbon fibers (VGCFs), carbon fibers and/or metal-based conductive materials, such as perovskite materials, such as tin, tin oxide, titanium oxide, $LaSrCoO_3$, or $LaSrMnO_3$, but it is not limited thereto.

In some embodiments, the cathode active material layer **230** further comprises a thickener and/or a dispersant. In one embodiment, the cathode active material layer **230** comprises a thickener, such as carboxymethyl cellulose (CMC).

Still referring to **FIG. 3,** the anode **260** may comprise an anode current collector **255** and an anode active material layer **250** disposed on at least one surface of the anode current collector **255.** The anode current collector **255** may comprise, for example, a copper foil, a nickel foil, a stainless-steel foil, a titanium foil, a nickel foam, a copper foam, a polymer substrate coated with a conductive metal, or the like. The anode current collector may have a thickness of, for example, about 10 $\mu$m to about 50 $\mu$m, but its thicknesses is not limited thereto.

The anode active material layer **250** may comprise an anode active material, which may be a material capable of intercalating and deintercalating lithium ions. For example, the anode active material may comprise one or more crystalline carbon-based materials, such as crystalline carbon, amorphous carbon, a carbon composite, or carbon fibers, or the like; lithium metal; a lithium alloy; a silicon (Si)-containing material, a tin (Sn)-containing material, or the like.

Examples of amorphous carbon that may be used in an anode active material include hard carbon, soft carbon, cokes, mesocarbon microbead (MCMB), mesophase pitch-based carbon fiber (MPCF), and the like. Examples of the crystalline carbon that may be used in an anode active material include graphite-based carbons, such as natural graphite, artificial graphite, graphite cokes, graphite MCMB, and graphite MPCF, and the like.

When used in an anode active material, a lithium metal may comprise pure lithium metal or may be a lithium metal having a protective layer formed thereon, which may be particularly useful in suppressing dendrite growth. In one embodiment, a lithium metal-containing layer deposited or coated on the anode current collector **255** may be used as the anode active material layer **250.** In one embodiment, a lithium thin-film layer may be used as the anode active material layer **250.**

When used in an anode active material, a lithium alloy may include, for example, aluminum, zinc, bismuth, cadmium, antimony, silicon, lead, tin, gallium, indium, or the like.

When used in an anode active material, a silicon-containing material may provide more enhanced capacity characteristics. A silicon-containing material may comprise Si, $SiO_x$ (wherein $0 < x < 2$), metal-doped $SiO_x$ (wherein $0 < x < 2$), a silicon-carbon composite, or the like. The metal in a metal-doped $SiO_x$ may comprise lithium and/or magnesium.

For example, an anode slurry may be prepared by mixing the anode active material in a solvent. The anode slurry may be applied/deposited to the anode current collector, then dried and roll-pressed to prepare the anode active material layer **250.** The coating process may be performed using substantially the same method as the method of preparing the cathode active material layer **230.** The anode active material layer **250** may further comprise a binder, and optionally may further comprise the electrolyte, a conductive agent, a thickener, or the like.

In some embodiments, the anode **260** may comprise the anode active material layer in the form of a lithium metal formed through a deposition/coating process.

The solvent for the anode active material layer may comprise, for example, water, pure water, deionized water, distilled water, ethanol, isopropanol, methanol, acetone, n-propanol, t-butanol, or the like.

In one embodiment, the electrolyte included in the anode active material layer **250** may be the above-described electrolyte for a secondary battery. In one embodiment, the electrolyte included in the anode active material layer **250** may be the above-described inorganic electrolyte. For example, the secondary battery may be provided as an all-solid-state battery comprising the above-described electrolyte or inorganic electrolyte.

The above-described materials that can be used when fabricating the cathode as the binder, conductive material and thickener may also be used.

In some embodiments, an SBR-based binder, carboxymethyl cellulose, polyacrylic acid-based binder, poly(3,4-ethylenedioxythiophene (PEDOT)-based binder, and the like may be used as an anode binder.

Still referring to **FIG. 3,** the electrolyte layer **210** comprises an electrolyte, such as any disclosed herein (e.g., the electrolyte **100** described with respect to **FIG.1**). The electrolyte layer **210** may comprise a flame-retardant compound as described herein. For example, the electrolyte layer **210** may be a separation membrane comprising an electrolyte. In such embodiments, a separation membrane may be formed by impregnating a separation membrane with a first mixed solution as described herein and curing the first mixed solution to polymerize or copolymerize the electrolyte monomer(s) therein, as described herein.

As shown in **FIG. 3,** the electrolyte layer **210** may be interposed between the cathode **240** and the anode **260.** In some embodiments, the electrolyte layer **210** is a gel-polymer electrolyte layer **210** comprising electrolyte as disclosed

herein.

An electrode cell **200** comprising cathode **240,** the anode **260,** and the electrolyte layer **210,** and a plurality of electrode cells **200** may be stacked to form an electrode assembly. An electrode assembly may be formed, for example, by winding, stacking, or folding cells, or the like. The electrode assembly may be disposed inside a case. For example, a pouch-type case, a prismatic case, a cylindrical case, or a coin-type case, or the like, may be used as a case for an electrode assembly.

In certain embodiments, electrode tabs (a cathode tab and an anode tab, not shown in **FIG. 3**) may protrude from the cathode current collector **235** and the anode current collector **255,** respectively, and may extend to one side of a case in which the electrode assembly is disposed. The electrode tabs may be fused together with the one side of the case and connected to electrode leads (a cathode lead and an anode lead) that extend or are exposed to the outside of the case.

The invention relates also to the following numbered aspects:

Aspect 1: A monomer for an electrolyte represented by Formula 1 below:

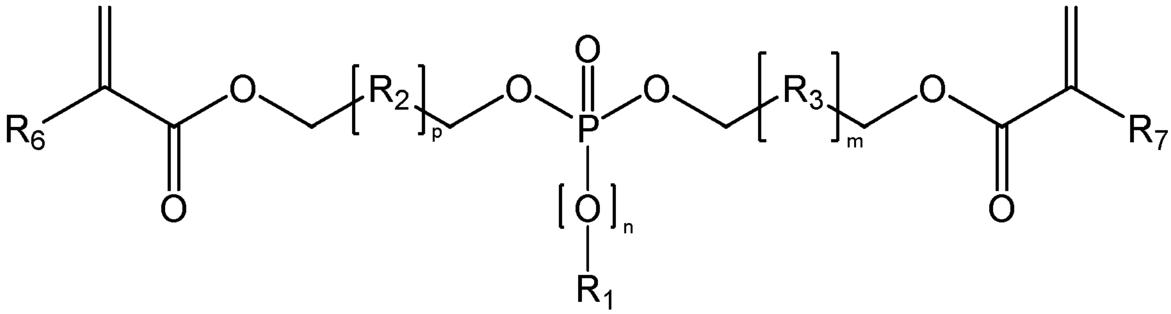

[Formula 1]

wherein:

$R_1$ is a substituted or unsubstituted C6 to C12 aromatic hydrocarbon group or is *-$R_4$-$R_5$;
$R_2$ and $R_3$ are each independently a substituted or unsubstituted C1 to C6 alkylene group, or a substituted or unsubstituted C1 to C7 oxyalkylene group;
$R_4$ is a C3 to C12 alkylene group in which at least one hydrogen atom is substituted with a fluorine atom;
$R_5$ is a polymerizable functional group;
* represents the bond to the adjacent oxygen atom;
$R_6$ and $R_7$ are each independently hydrogen or a C1 to C5 alkyl group;
m and p are each independently 0 to 10; and
n is 0 or 1.

Aspect 2: The monomer for an electrolyte according to aspect 1, wherein $R_1$ is a substituted or unsubstituted C6 to C10 aromatic hydrocarbon group, or is *-$R_4$-$R_5$, wherein $R_5$ is a (meth)acrylate group.

Aspect 3: The monomer for an electrolyte according to aspect 2, wherein $R_1$ is a phenyl group, or is *-$R_4$-$R_5$, wherein $R_4$ is a C3 to C6 alkylene group in which at least one hydrogen atom is substituted with a fluorine atom.

Aspect 4: The monomer for an electrolyte according to any one of aspects 1 to 3, wherein $R_2$ and $R_3$ are each independently an unsubstituted or fluorine-substituted C1 to C3 alkylene group, or a fluorine-substituted C1 to C5 oxyalkylene group.

Aspect 5: The monomer for an electrolyte according to any one of aspects 1 to 4, wherein:

$R_1$ is a substituted or unsubstituted C6 to C10 aryl group, or is *-$R_4$-$R_5$, wherein $R_5$ is a (meth)acrylate group; and $R_2$ and $R_3$ are each independently an unsubstituted or fluorine-substituted C1 to C3 alkylene group or a fluorine-substituted C1 to C5 oxyalkylene group.

Aspect 6: The monomer for an electrolyte according to aspect 5, wherein n is 1.

Aspect 7: The monomer for an electrolyte according to any one of aspects 1 to 6, wherein the monomer is represented by one or more of Formula 1-1, 1-2, and 1-3:

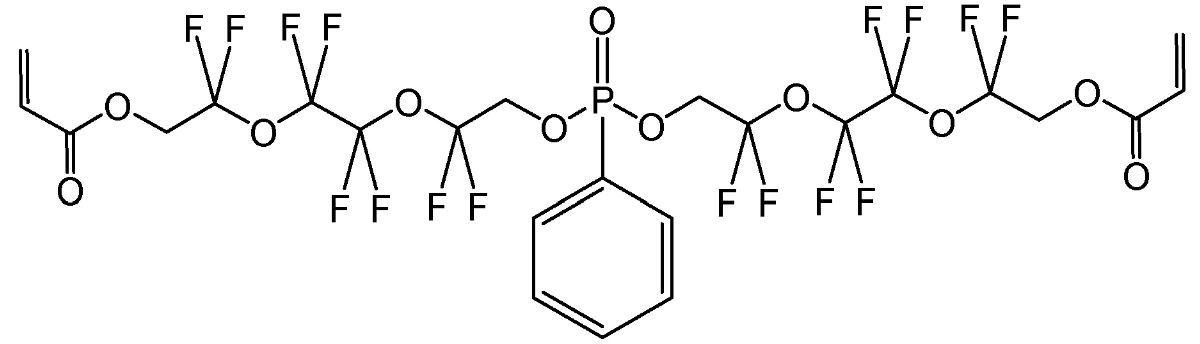

[Formula 1-1]

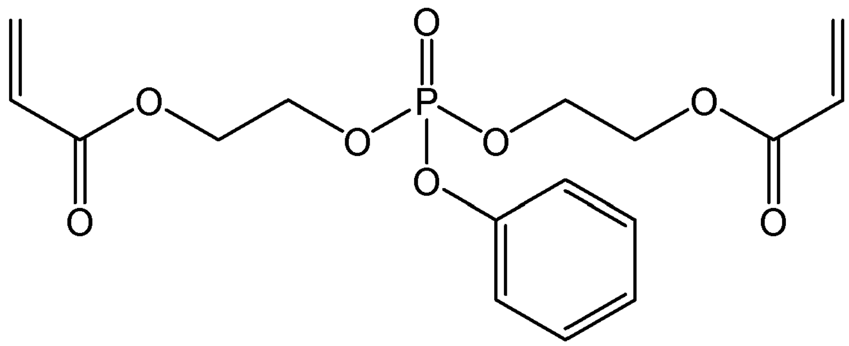

[Formula 1-2]

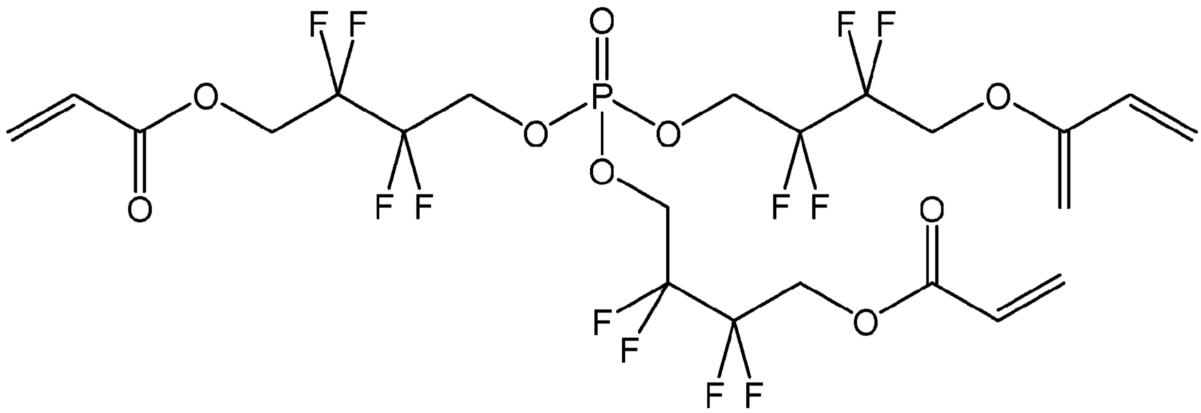

[Formula 1-3]

Aspect 8: An electrolyte comprising:

a flame-retardant compound comprising a polymerization product of one or more monomers for an electrolyte according to any one of aspects 1 to 7; and
a lithium salt.

Aspect 9: The electrolyte according to aspect 8, wherein the electrolyte further comprises a porous composite electrolyte comprising an organic polymer and an inorganic electrolyte.
Aspect 10: The electrolyte according to aspect 9, wherein the inorganic electrolyte comprises an oxide-based solid electrolyte.
Aspect 11: The electrolyte according to any one of aspects 8 to 10, wherein the electrolyte comprises 1% by weight to 30% by weight of the flame-retardant compound based on the total weight of the electrolyte.

Aspect 12: A secondary battery comprising:

- a cathode;
- an anode disposed opposite to the cathode; and
- an electrolyte layer disposed between the cathode and the anode, and comprising the electrolyte according to any one of aspects 8 to 11.

Aspect 13: A method of preparing an electrolyte, comprising:

- preparing a first mixed solution comprising the monomer for an electrolyte according to any one of aspects 1 to 7 and an electrolyte solution; and
- curing the first mixed solution.

Aspect 14: The method of preparing an electrolyte according to aspect 13, wherein the first mixed solution comprises 1% by weight to 30% by weight of the monomer based on the total weight of the first mixed solution.

Aspect 15: The method of preparing an electrolyte according to aspect 13 or 14, wherein:

- the monomer comprises a thermally reactive functional group and the first mixed solution further comprises a thermal initiator, and wherein curing comprises heat-treating the first mixed solution, and/or
- the monomer comprises a photo-reactive functional group and the first mixed solution further comprises a photo-initiator, and the curing comprises irradiating the first mixed solution with light.

## EXAMPLES

### Preparation Example 1: Preparation of Electrolyte Monomers

(1) Preparation of an Electrolyte Monomer of Formula 1-1

100 ml of THF, 10 g (34.00 mmol) of 1H,1H,8H,8H-perfluoro-3,6-dioxaoctane-1,8-diol, and 4.13 g (40.80 mmol) of triethylamine were introduced into a reactor to prepare a mixed solution.

After cooling the reactor to 0 °C, 2.8 g (30.95 mmol) of acryloyl chloride dissolved in 15 ml of THF was added to the mixed solution over 1 hour.

Thereafter, the mixture was stirred and filtered for 18 hours at room temperature (25 °C), washed once each with 0.1 N HCl aqueous solution, $NaHCO_3$ aqueous solution, and pure water ($H_2O$), and then dried under reduced pressure to remove the solvent, thereby preparing a concentrated solution.

The concentrated solution was purified by column chromatography using hexane and ethyl acetate to obtain 3.5 g of an intermediate.

The obtained intermediate was dissolved in 100 ml of dichloromethane, and then 2.55 g (25.2 mmol) of triethylamine, and 0.98 g (5.03 mmol) of dichlorophenylphosphine oxide were sequentially added. The reaction mixture was stirred for 24 hours at room temperature (25 °C), and then washed once each with 0.1 N HCl aqueous solution, $NaHCO_3$ aqueous solution, and pure water ($H_2O$).

Subsequently, the mixture was purified by column chromatography using hexane and ethyl acetate to obtain 2.67 g (yield: 19%) of an electrolyte monomer.

The obtained electrolyte monomer was the compound represented by Formula 1-1 above ($^1$H-NMR chemical shift (500 MHz, $CDCl_3$), $\delta$: 7.83-7.86 (m, 2H), 7.63-7.67 (m, 1H), 7.53-7.57 (m, 2H), 6.51-6.54 (d, 2H), 6.16-6.21 (q, 2H), 5.97-5.99 (d, 2H), 4.49-4.59 (t, 4H), 4.37-4.47 (m, 4H)).

(2) Preparation of an Electrolyte Monomer of Formula 1-2

100 ml of dichloromethane, 7.82 g (67.31 mmol) of 2-hydroxyethyl acrylate, and 7.49 g (74.03 mmol) of triethylamine were introduced into a reactor to prepare a mixed solution.

After cooling the reactor to 0 °C, 7.1 g (33.65 mmol) of phenyl dichlorophosphate was added to the mixed solution over 30 minutes.

Thereafter, the mixture was stirred at room temperature (25 °C) for 21 hours, washed once each with 0.1 N HCl aqueous solution, $NaHCO_3$ aqueous solution, and pure water ($H_2O$), and then dried under reduced pressure to remove the solvent, thereby preparing a concentrated solution.

The concentrated solution was purified by column chromatography using hexane and ethyl acetate to obtain 8.31 g (yield: 66.7%) of an electrolyte monomer.

The obtained electrolyte monomer was the compound represented by Formula 1-2 ($^1$H-NMR chemical shift (500 MHz, Chloroform-d), δ: 7.31-7.38 (m, 2H), 7.15-7.22 (m, 3H), 6.41-6.44 (m, 2H), 6.08-6.13 (m, 2H), 5.84-5.87 (m, 2H), 4.37-4.39 (m, 8H)).

(3) Preparation of an Electrolyte Monomer of Formula 1-3

100 ml of THF, 10 g (61.70 mmol) of tetrafluoro-1,4-butanediol, and 7.49 g (74.04 mmol) of triethylamine were introduced into a reactor to prepare a mixed solution.

After cooling the reactor to 0 °C, 5.08 g (56.15 mmol) of acryloyl chloride was added to the mixed solution over 1 hour. The reaction mixture was stirred and filtered for 18 hours at room temperature (25 °C) to obtain a filtrate. Then, THF was removed under reduced pressure to obtain a preliminary intermediate.

Thereafter, the preliminary intermediate was dissolved in dichloromethane, washed once each with 0.1 N HCl aqueous solution, $NaHCO_3$ aqueous solution and pure water ($H_2O$), and then purified by column chromatography using hexane and ethyl acetate to obtain 4.47 g (yield: 36.9%) of an intermediate.

The obtained intermediate was dissolved in 50 ml of dichloromethane, and then 2.16 g (21.34 mmol) of triethylamine, and 0.99 g (6.47 mmol) of phosphoryl chloride ($POCl_3$) were sequentially added. The reaction mixture was stirred for 24 hours at 0 °C, washed once each with 0.1 N HCl aqueous solution, $NaHCO_3$ aqueous solution and pure water ($H_2O$), and dried under reduced pressure.

Thereafter, the resulting product was purified by column chromatography using hexane and ethyl acetate to obtain 3.12 g (yield: 25.8%) of an electrolyte monomer.

The obtained electrolyte monomer was the compound represented by Formula 1-3 above ($^1$H-NMR chemical shift (500 MHz, $CDCl_3$), δ: 6.51-6.55 (m, 3H), 6.17-6.23 (m, 3H), 5.97-6.00 (m, 3H), 4.63-4.68 (q, 6H), 4.52-4.59 (m, 6H)).

**Preparation Example 2: Preparation of First Mixed Solutions**

**Example 1:** 5 wt% of the compound represented by Formula 1-1 above (as an electrolyte monomer) and 5 wt% of fluorinated ethylene carbonate (FEC, as an additive) were mixed with a 1.0 M $LiPF_6$ solution (a mixed solvent of EC/EMC in a volume ratio of 3:7, as a lithium salt) to prepare a first mixed solution. Additional first mixed solutions were prepared as shown in **TABLE 1** below:

**TABLE 1**

| | Type of electrolyte monomer | Content of electrolyte monomer based on total weight of first mixed solution (wt%) |
|---|---|---|
| Example 1 | A1 | 5 |
| Example 2 | A1 | 7.5 |
| Example 3 | A2 | 5 |
| Example 4 | A2 | 7.5 |
| Example 5 | A3 | 5 |
| Example 6 | A3 | 7.5 |
| Example 7 | A1 | 3 |
| Example 8 | A1 | 15 |
| Comparative Example 1 | - | - |
| Comparative Example 2 | B1 | 5 |
| Comparative Example 3 | B1 | 7.5 |

The specific components described in **TABLE 1** are as follows:

A1: Compound represented by Formula 1-1;
A2: Compound represented by Formula 1-2;
A3: Compound represented by Formula 1-3; and
B1: Trimethylolpropane ethoxylate triacrylate.

**Preparation Example 3: Manufacture of Lithium Secondary Battery**

A cathode slurry was prepared by mixing $LiNi_{0.6}Co_{0.2}Mn_{0.2}O_2$ as a cathode active material, PVDF as a binder, and carbon black as a conductive material in a weight ratio of 90:5:5. The cathode slurry was uniformly applied to an aluminum foil, and then dried and roll-pressed to fabricate a cathode.
An anode slurry was prepared by mixing natural graphite as an anode active material, SBR/CMC as a binder, and carbon black as a conductive material in a weight ratio of 96:3:1. The anode slurry was uniformly applied to a copper (Cu) foil, then dried and roll-pressed to fabricate an anode.
Polyethylene (PE) was prepared as a separation membrane. The cathode and the anode were placed so that they faced each other with the separation membrane interposed therebetween, and a tab portion of the cathode and a tab portion of the anode were welded, respectively.
An assembly of the welded cathode/separation membrane/anode was put into a pouch, followed by sealing three sides of the pouch except for one side through which the first mixed solution as the electrolyte for a secondary battery was injected. At this time, a portion having the tab was included in the sealing portion. After injecting the first mixed solution through the remaining open side, the remaining open side was also sealed, allowing it to be impregnated for 12 hours or more by the first mixed solution. Thereafter, the assembly was heat cured in an oven at 70 °C for 1 hour to manufacture a secondary battery.

**Comparative Example 1**

For comparative examples, a cathode slurry was prepared by mixing $LiNi_{0.6}Co_{0.2}Mn_{0.2}O_2$ as a cathode active material, PVDF as a binder, and carbon black as a conductive material in a weight ratio of 90:5:5. The cathode slurry was uniformly applied to an aluminum foil, then dried and roll-pressed to fabricate a cathode.
An anode slurry was prepared by mixing natural graphite as an anode active material, SBR/CMC as a binder, and carbon black as a conductive material in a weight ratio of 96:3:1. The anode slurry was uniformly applied to a Cu foil having a thickness of 10 μm, followed by drying and roll-pressing to fabricate an anode.
Polyethylene (PE) was prepared as a separation membrane. The cathode and the anode were positioned facing each other with the separation membrane in between, and the tab portion of the cathode and the tab portion of the anode were welded, respectively.
An assembly of the welded cathode/separation membrane/anode was put into a pouch, followed by sealing three sides of the pouch, including those sides with tab portions, except for one side for electrolyte injection. The electrolyte was prepared as a solution by adding 5 wt% of FEC to a 1.0 M $LiPF_6$ solution (a mixed solvent of EC/EMC in a volume ratio of 3:7. After injecting the electrolyte through the remaining one side, it was also sealed, allowing it to be impregnated for 12 hours or more, to manufacture a secondary battery.
Comparative Examples 2 and 3 were manufactured in the same manner as in Example 1, except that, when preparing an electrolyte monomer, the type of the electrolyte monomer was changed as shown in **TABLE 1.**

**Experimental Example 1: Evaluation of Electrolyte**

**(1) Evaluation of Self-extinguishing Properties**

1) Examples 1 to 8, and Comparative Examples 2 and 3

Glass fiber was cut into a diameter of 16 pi, dried at 120 °C to prepare dried glass fiber, and the mass (g) of the dried glass fiber was measured.
A gasket and the dried glass fiber were sequentially placed into the bottom of a coin cell, followed by injection of 0.5 mL of the first mixed solution prepared according to the above-described examples and comparative examples (Comparative Examples 2 and 3). Thereafter, the spacer and cap were sequentially placed to assemble the coin cell.
The dried glass fiber was placed and impregnated with the first mixed solution, then cured for 1 hour at 70 °C. Subsequently, the coin cell was disassembled to prepare a sample (a sample in which the dried glass fiber impregnated with the first mixed solution was cured), and the mass (g) of the sample was measured.
After igniting the sample, the time until the fire went out (extinguishing time) was measured.
The self-extinguishing time was calculated according to Equation 1 below.

[Equation 1]

$$\text{Self}-\text{extinguishing time (s/g)} = \frac{\text{Extinguishing time (s)}}{\text{Sample mass (g)} - \text{Dried glass fiber mass (g)}}$$

2) Comparative Example 1

Glass fiber was cut into a diameter of 16 pi, dried at 120 °C to prepare dried glass fiber.
3 ml of the electrolyte according to above-described Comparative Example 1 was placed into a sealed container, and the mass (g) of the electrolyte was measured.
Thereafter, the dried glass fiber was placed into the sealed container and impregnated with the electrolyte to prepare a sample. The sample was then taken out, and the mass (g) of the residual electrolyte that was not impregnated was measured.
After igniting the sample, the time until the fire went out (extinguishing time) was measured.
The self-extinguishing time was calculated according to Equation 2 below.

[Equation 2]

$$\text{Self}-\text{extinguishing time}\left(\frac{\text{s}}{\text{g}}\right) = \frac{\text{Extinguishing time (s)}}{\text{Electrolyte mass (g)} - \text{Residual electrolyte mass (g)}}$$

The results of the self-extinguishing time calculation are shown in **TABLE 2** below.

**TABLE 2**

| Classification | Self-extinguishing time (s/g) |
|---|---|
| Example 1 | 68.29 |
| Example 2 | 57.17 |
| Example 3 | 68.50 |
| Example 4 | 66.32 |
| Example 5 | 55.44 |
| Example 6 | 51.50 |
| Example 7 | 95.00 |
| Example 8 | 40.10 |
| Comparative Example 1 | 129.03 |
| Comparative Example 2 | 95.03 |
| Comparative Example 3 | 105.39 |

Referring to **TABLE 2,** in the examples in which the compounds represented by Formulas 1-1 to 1-3 were used as electrolyte monomers, the self-extinguishing time was 95 s/g or less.
In Comparative Example 1, where no electrolyte monomer was used, the self-extinguishing time exceeded 125 s/g.
In Comparative Examples 2 and 3 where compounds other than the compounds represented by Formulas 1-1 to 1-3 were used as electrolyte monomers, the self-extinguishing time exceeded 95 s/g.

**Experimental Example 2: Evaluation of lithium secondary battery**

**(1) Measurement initial capacity**

The lithium secondary batteries according to the above-described examples and comparative examples were charged (CC-CV 0.1C 4.3V 0.005C CUT-OFF) in a chamber at 25 °C, then the initial charge capacity was measured, and

were discharged (CC 0.1V 3.0V CUT-OFF), then the initial discharge capacity was measured.

The measured initial charge capacity and initial discharge capacity are shown in **TABLE 3** below.

### (2) Evaluation of cycle life retention rate

Charging (CC/CV 0.5C 4.3V 0.05C CUT-OFF) and discharging (CC 0.5C 2.7V CUT-OFF) were repeated on the lithium secondary batteries according to the above-described examples and comparative examples for 50 cycles at 25 °C. Then, the cycle life retention rate was evaluated as a percentage of the discharge capacity at the 50th cycle divided by the discharge capacity at the 1st cycle.

The evaluated cycle life retention rate is shown in **TABLE 3** below.

**TABLE 3**

| Classification | Initial charge capacity (mAh/g) | Initial discharge capacity (mAh/g) | Cycle life retention rate (50 cycles at 25°C) (%) |
|---|---|---|---|
| Example 1 | 173.1 | 172.72 | 98.62 |
| Example 2 | 172.2 | 171.72 | 98.81 |
| Example 3 | 172.6 | 172.27 | 98.74 |
| Example 4 | 173.7 | 173.30 | 99.64 |
| Example 5 | 172.2 | 171.82 | 99.04 |
| Example 6 | 174.8 | 174.31 | 99.23 |
| Example 7 | 171.9 | 171.22 | 97.51 |
| Example 8 | 171.2 | 161.30 | 97.52 |
| Comparative Example 1 | 171.4 | 171.01 | 96.42 |
| Comparative Example 2 | 171.8 | 171.15 | 96.80 |
| Comparative Example 3 | 171.9 | 169.67 | 97.50 |

Referring to **TABLE 3,** in the examples using the lithium secondary batteries comprising the electrolyte comprising a polymer or copolymer of at least one electrolyte monomer selected from the group consisting of compounds represented by Formulas 1-1 to Formula 1-3, the cycle life retention rate exceeded 97.5%.

In Example 7, where the content of the electrolyte monomer was reduced, the initial capacity and the cycle life retention rate decreased slightly.

In Example 8, where the content of the electrolyte monomer was increased, the initial capacity and cycle life retention rate decreased slightly.

In comparative examples where an electrolyte comprising a polymer or copolymer of monomers other than the compounds represented by Formulas 1-1 to Formula 1-3 was used, or where an electrolyte solution that did not use the electrolyte monomer was used, the cycle life retention rate decreased.

## Claims

**1.** A monomer for an electrolyte represented by Formula 1 below:

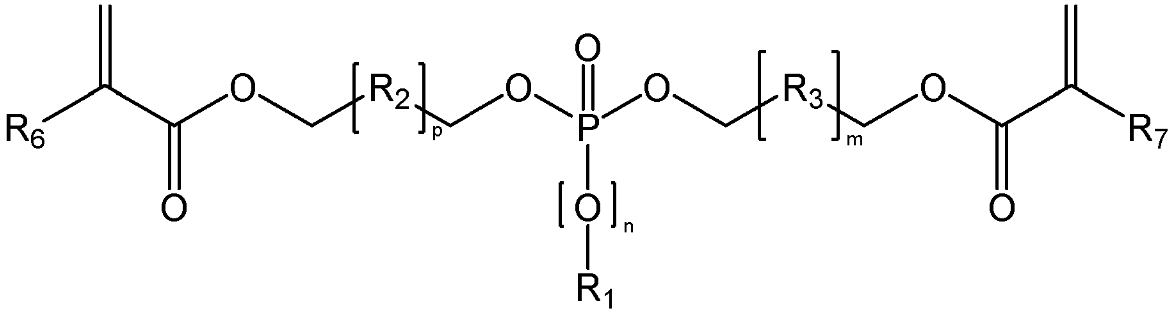

[Formula 1]

wherein:

$R_1$ is a substituted or unsubstituted C6 to C12 aromatic hydrocarbon group or is *-$R_4$-$R_5$;
$R_2$ and $R_3$ are each independently a substituted or unsubstituted C1 to C6 alkylene group, or a substituted or unsubstituted C1 to C7 oxyalkylene group;
$R_4$ is a C3 to C12 alkylene group in which at least one hydrogen atom is substituted with a fluorine atom;
$R_5$ is a polymerizable functional group;
* represents the bond to the adjacent oxygen atom;
$R_6$ and $R_7$ are each independently hydrogen or a C1 to C5 alkyl group;
m and p are each independently 0 to 10; and
n is 0 or 1.

**2.** The monomer for an electrolyte according to claim 1, wherein $R_1$ is a substituted or unsubstituted C6 to C10 aromatic hydrocarbon group, or is *-$R_4$-$R_5$, wherein $R_5$ is a (meth)acrylate group.

**3.** The monomer for an electrolyte according to claim 2, wherein $R_1$ is a phenyl group, or is *-$R_4$-$R_5$, wherein $R_4$ is a C3 to C6 alkylene group in which at least one hydrogen atom is substituted with a fluorine atom.

**4.** The monomer for an electrolyte according to any one of claims 1 to 3, wherein $R_2$ and $R_3$ are each independently an unsubstituted or fluorine-substituted C1 to C3 alkylene group, or a fluorine-substituted C1 to C5 oxyalkylene group.

**5.** The monomer for an electrolyte according to any one of claims 1 to 4, wherein:

$R_1$ is a substituted or unsubstituted C6 to C10 aryl group, or is *-$R_4$-$R_5$, wherein $R_5$ is a (meth)acrylate group; and
$R_2$ and $R_3$ are each independently an unsubstituted or fluorine-substituted C1 to C3 alkylene group or a fluorine-substituted C1 to C5 oxyalkylene group.

**6.** The monomer for an electrolyte according to claim 5, wherein n is 1.

**7.** The monomer for an electrolyte according to any one of claims 1 to 6, wherein the monomer is represented by one or more of Formula 1-1, 1-2, and 1-3:

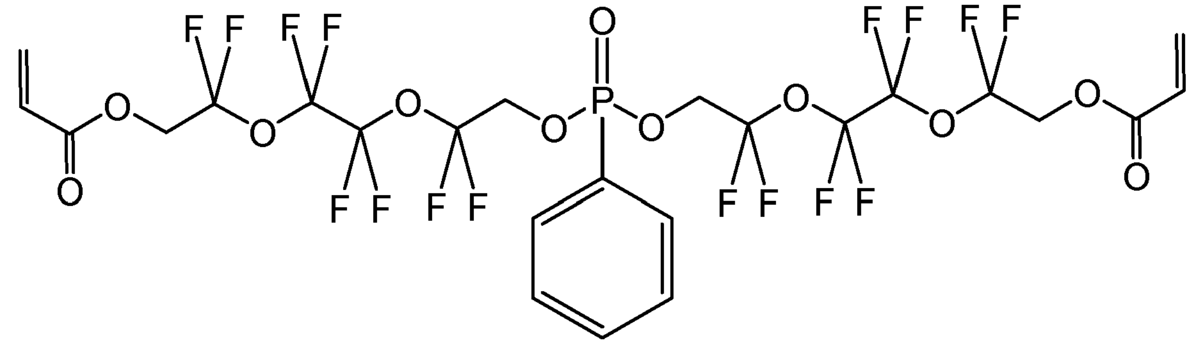

[Formula 1-1]

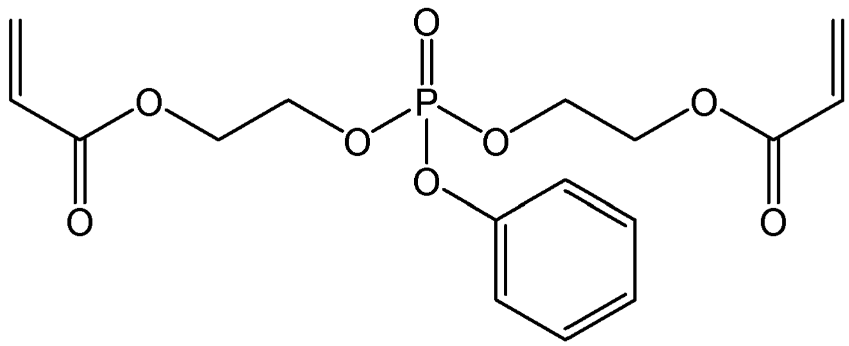

[Formula 1-2]

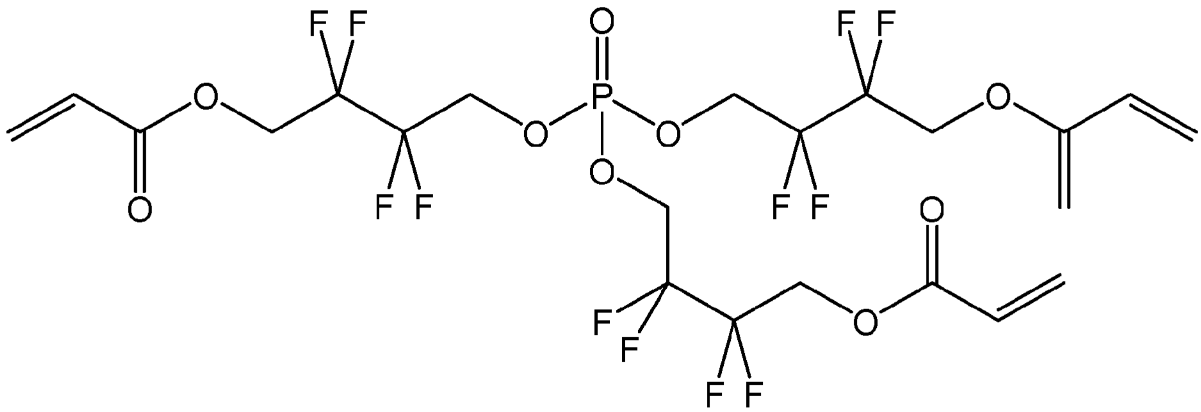

[Formula 1-3]

8. An electrolyte comprising:

a flame-retardant compound comprising a polymerization product of one or more monomers for an electrolyte according to any one of claims 1 to 7; and
a lithium salt.

9. The electrolyte according to claim 8, wherein the electrolyte further comprises a porous composite electrolyte comprising an organic polymer and an inorganic electrolyte.

10. The electrolyte according to claim 9, wherein the inorganic electrolyte comprises an oxide-based solid electrolyte.

11. The electrolyte according to any one of claims 8 to 10, wherein the electrolyte comprises 1% by weight to 30% by

weight of the flame-retardant compound based on the total weight of the electrolyte.

**12.** A secondary battery comprising:

a cathode;
an anode disposed opposite to the cathode; and
an electrolyte layer disposed between the cathode and the anode, and comprising the electrolyte according to any one of claims 8 to 11.

**13.** A method of preparing an electrolyte, comprising:

preparing a first mixed solution comprising the monomer for an electrolyte according to any one of claims 1 to 7 and an electrolyte solution; and
curing the first mixed solution.

**14.** The method of preparing an electrolyte according to claim 13, wherein the first mixed solution comprises 1% by weight to 30% by weight of the monomer based on the total weight of the first mixed solution.

**15.** The method of preparing an electrolyte according to claim 13 or 14, wherein:

the monomer comprises a thermally reactive functional group and the first mixed solution further comprises a thermal initiator, and wherein curing comprises heat-treating the first mixed solution, and/or
the monomer comprises a photo-reactive functional group and the first mixed solution further comprises a photo-initiator, and the curing comprises irradiating the first mixed solution with light.

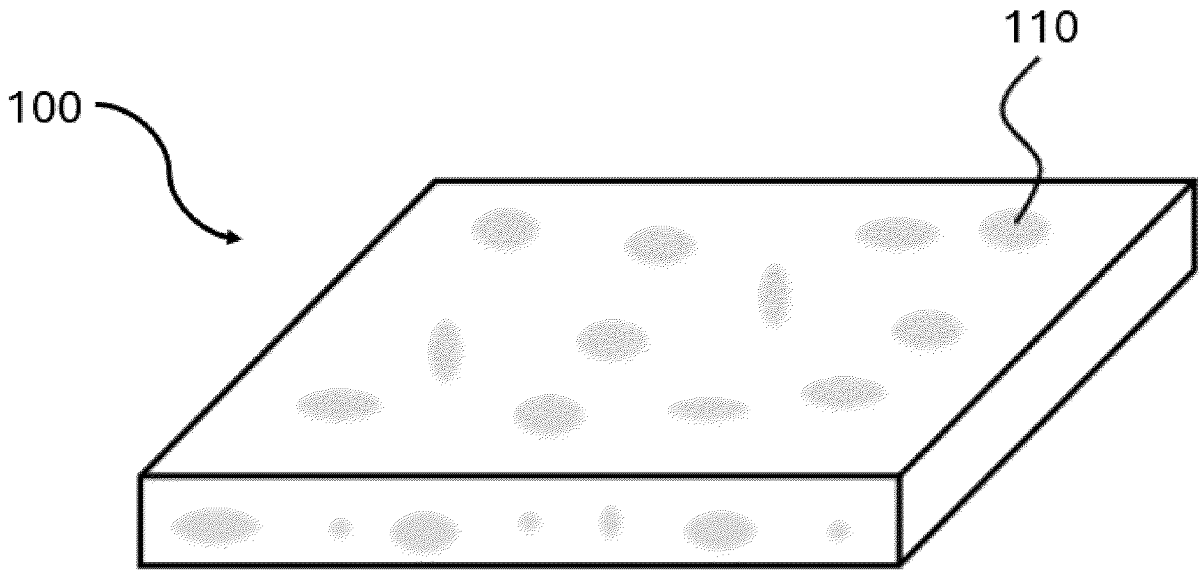
110
100

FIG. 1

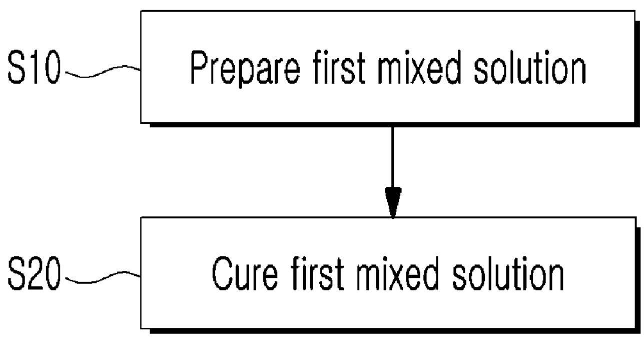
S10
Prepare first mixed solution
S20
Cure first mixed solution

FIG. 2

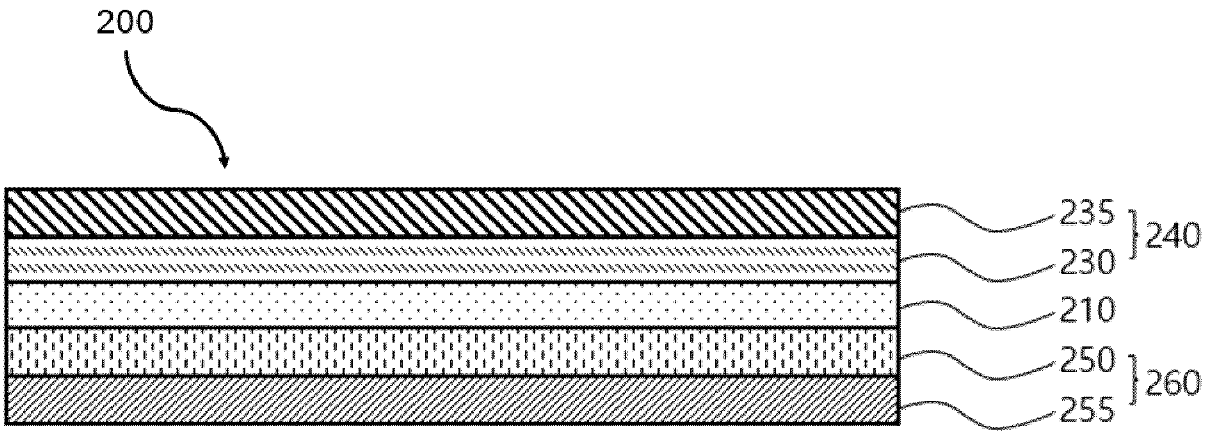


FIG. 3

Europäisches Patentamt
European Patent Office
Office européen des brevets

# EUROPEAN SEARCH REPORT

Application Number
EP 25 19 5898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2020 187973 A (KONICA MINOLTA INC) 19 November 2020 (2020-11-19) * [0005], [0018], [0061]-[0063], formula (3), formula (3)-3.; the whole document * ----- | 1-15 | INV. C07F9/00 |
| X | KR 2010 0039922 A (KOREA RES INST CHEM TECH [KR]) 19 April 2010 (2010-04-19) * [0074] * ----- | 1,2 | |

TECHNICAL FIELDS SEARCHED (IPC)

C07F

The present search report has been drawn up for all claims

1

| Place of search | Date of completion of the search | Examiner |
|---|---|---|
| The Hague | 13 January 2026 | Savic, Aleksandar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 19 5898

This annex lists the patent family members relating to the patent documents cited in the above-mentioned European search report. The members are as contained in the European Patent Office EDP file on
The European Patent Office is in no way liable for these particulars which are merely given for the purpose of information.

13-01-2026

| Patent document cited in search report | Publication date | Patent family member(s) | Publication date |
|---|---|---|---|
| JP 2020187973 A | 19-11-2020 | NONE | |
| KR 20100039922 A | 19-04-2010 | NONE | |

EPO FORM P0459

For more details about this annex : see Official Journal of the European Patent Office, No. 12/82